# EUROPEAN PATENT APPLICATION

(11) **EP 4 817 578 A1**
(43) Date of publication of application: **07.10.2026**
(21) Application number: 25202904.6
(22) Date of filing: 17.09.2025
(51) Int. Cl.: A61G 3/06, B60P 1/43

(54) **FOLDABLE RAMP FOR WHEELCHAIR ACCESS TO A PASSENGER CAR REAR DOOR WITH A BRIDGE COMPRISING AN EXTRUDED PART AND/OR A REINFORCING PART AND/OR WITH INTEGRATED LOCKING MECHANISM WITH AN ELECTRIC ACTUATOR**

(30) Priority: 04.04.2025 EP 25168648
(71) Applicant: API CZ s.r.o., 391 76 Slapy (CZ)
(72) Inventor: Bartos, Miroslav, 39001 Tabor (CZ); Huisl, Marek, 39165 Bechyne (CZ)
(74) Representative: Schmid, Nils T.F.

(57) **Abstract**

The present invention relates to a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position; and a bridge for rotatably connecting the platform with the passenger car, characterized in that the bridge comprises an extrusion profile.

## Description

The present disclosure relates to a foldable ramp for providing wheelchair access to passenger cars. Specifically, the present disclosure relates to a foldable ramp system designed for rear door access, featuring a platform with multiple positions, a bridge with an extrusion profile, a bridge with a reinforcing part and an integrated locking mechanism with an electric actuator.

In the field of wheelchair accessibility for passenger vehicles, it is common to use ramps to facilitate the entry and exit of wheelchair users. Known systems typically involve fixed or detachable ramps that can be manually deployed and stowed. These ramps often require significant physical effort to operate, which can be challenging for individuals with limited mobility or strength. Additionally, the storage of these ramps within the vehicle can be cumbersome, taking up valuable space and potentially obstructing other functionalities of the vehicle. Furthermore, known means for rotatably connecting the platform with a passenger car, which can be called "bridge" suffer from a complex structure made from a multitude of parts making the bridge expensive, complex to be mounted and not easy to be adapted to different vehicles.

According to known designs, ramps are often constructed from heavy materials such as steel to ensure durability and strength. However, this results in increased weight, making the ramps difficult to handle and deploy. Furthermore, the manual operation of these ramps can be time-consuming and may require assistance from another person, reducing the independence of the wheelchair user. Despite the substantial advances in the field of wheelchair accessibility, there remains a need for more efficient, user-friendly, and space-saving solutions.

Existing ramps also face challenges related to their integration with the vehicle. The mechanisms for attaching and detaching the ramps can be complex and prone to wear and tear, leading to maintenance issues and reduced reliability over time. Additionally, the deployment mechanisms may not always provide a smooth transition between the ramp and the vehicle, causing discomfort or even safety hazards for the wheelchair user. The materials used in traditional ramps may also be susceptible to corrosion or damage from environmental factors, further compromising their longevity and performance.

Moreover, the lack of automated features in many current ramp systems means that users must rely on manual effort to switch between different positions of the ramp, such as the entry, transport, and passive positions. This manual operation can be particularly problematic in emergency situations where quick and easy access is essential. The absence of locking mechanisms in some designs can also pose safety risks, as the ramp may move unexpectedly during transport or use, potentially leading to accidents or injuries.

It is an object of this invention to provide a foldable ramp that overcomes one or more of the disadvantages of known systems, in particular that makes the ramp cheaper, easier to be mounted and adaptable for different passenger cars.

A first aspect of the invention provides a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, and a bridge for rotatably connecting the platform with the passenger car, wherein the bridge comprises an extrusion profile.

Preferably, the extrusion profile extends along at least 60%, 70%, 80%, 90% or 100% of the extension of the platform in a width direction, which may be referred to the direction extending parallel to a rotation axis of the bridge for rotating the bridge between the transport position and the entry position.

The term "width" of the platform floor may refer to its extension in width direction. The "width direction" may refer to the direction defining the space between two side walls of the platform or the direction defining the space between two wheels of the same axis of the passenger car. The "length" of the platform floor may refer to the extension of the platform in length direction. The "length direction" may refer to the direction a wheelchair moves when it accesses the car or to the direction defining the space between wheels of different axis of the passenger car. The "thickness" of the platform floor as used herein may refer to its extension in thickness direction of the platform. The "thickness direction" may refer to the direction extending orthogonal to a plane defined by the width direction and the length direction

In the entry position, the platform may be oriented at an angle between 5° and 30°, preferably between 10° and 20°, relative to the horizontal. Due to such an orientation of the platform during access of the wheelchair, the wheelchair may easily and smoothly access the interior of the passenger car. For example, the length of the ramp in a length direction is larger than 20 cm and preferably less than 5 m, preferably between 50 cm and 2 m. The platform may further be arranged in a transport position, i.e. a position in which a wheelchair has accessed the interior of the passenger car via its rear door and in which the passenger car may be driven while the wheelchair and the platform are stored in the back of the passenger car. In the transport position, the entry platform may be oriented in an upright position, particularly in a vertical position. **It** is clear, that in the transport position, the platform shall preferably have a length which is less than a vertical dimension of the passenger car, in particular a vertical dimension of the back of the passenger car. In an advantageous embodiment of the invention, the platform may be provided with a profiled upper surface and/or an anti-slip coating in order to facilitate use of the foldable ramp even in bad weather conditions, such as rain and/or snow, and/or to prevent the wheelchair from sliding backwards and/or sideways when accessing the passenger car rear door. Also, the platform may be arranged in a passive position in which the entry platform is provided in the passenger car in a lying position. The term "platform" as used herein may be interchangeably used with the term "entry platform".

The term "platform" particularly refers to the surface on which the wheelchair will roll. The ability to arrange the platform in several positions ensures versatility and convenience, allowing the ramp to be stowed away when not in use and easily deployed when needed. A "bridge" may be understood as the component that provides the connection between the platform and the car and that enables the platform to rotate into the desired position, in particular from the transport position into the passive position and vice versa. The use of an "extrusion profile" in the bridge may be understood as referring to a manufacturing process where a part of the bridge is formed by pushing material through a die to create a specific cross-sectional shape. This method can enhance the strength and durability of the bridge while reducing weight and manufacturing costs. One advantages of this design includes improved accessibility for wheelchair users, efficient use of space within the vehicle when the ramp is not in use, and the potential for a robust yet lightweight connection between the ramp and the car due to the extrusion profile in the bridge. Further to that, the use of an extrusion profile allows to implement multiple functions of the bridge into one part that can be produced easily and does not need to be assembled thereby reducing costs for assembling the foldable ramp. For example, as described in detail below, the extrusion profile may include a shaft channel for a shaft for rotatably mounting the bridge to the passenger car, a corrugated surface for avoiding the risk of slippage, a desired color avoiding the step of coloring the bridge and/or slots for receiving functional parts of the bridge or other parts of the foldable ramp, such as a bridge rear plate, a bridge side plate interacting with a pivot mechanism (in particular for pivoting the platform between the transport position and the passive position and vice versa) and/or a reinforcing part for allowing connecting low strength parts, such as plastic side plates, to the bridge.

The extrusion profile may comprise a walk-on part, in particular a walk-on surface. The walk on part may be the part of the bridge over which a wheelchair rolls when passing from the platform into the car. The walk-on part may have a corrugated surface, in particular to avoid slippage. The walk-on part may extend along at least 60%, 70%, 80%, 90% or 100% of the extension of the extrusion profile in width direction / extrusion direction and/or may extend substantially parallel to the platform when the platform is in at least one of the transport position, entry position and/or any position in between. "Substantially parallel" as used herein is in particular intended to cover a deviation from a perfect parallel alignment of up to 20°, 15°, 10°, 5°, 3° or 1°.

Particularly preferred the bridge comprises at least one bridge side plate, preferably one bridge side plate on each side of the extrusion profile, in particular on each side of the extrusion profile in width direction. The at least one bridge side plate may comprise guiding means of a pivot mechanism of the foldable ramp. A pivot mechanism as used herein may be employed to transition the platform between the transport and passive positions. This mechanism may pivot around an axis that runs parallel to the width of the platform. The pivot mechanism may be equipped with guiding means that define the path of the pivot axis during the transition, ensuring that the platform undergoes a combined rotational and translational movement. The bridge side plate may comprise guiding means of such pivot mechanism, in particular a groove of a pin-groove arrangement as described in detail below and/or a bearing for a connecting, in particular rotationally connecting, a slide, in particular a slide of a slide rail arrangement as described in detail below, thereto. The at least one bridge side plate may be an injection molded part and/or be made of plastic, in particular of Polyamide, more in particular of PA6.

The at least one bridge side plate may be connected to the extrusion profile by connecting means, in particular by screws. The connection may be realized at least partially by connecting the at least one side plate directly to the extrusion profile, in particular via connection holes, in particular screw holes, integrated in the extruded profile and/or at least partially indirectly, in particular via a reinforcing part, such as an inlay, in particular a steel inlay, as described in detail below. Particularly preferred, the at least one bridge side plate is connected directly, in particular via connecting holes in the extrusion profile, and indirectly, in particular by a reinforcing part being connected to the extrusion profile, to the extrusion profile. For making the mounting of the bridge side plates easier, the extrusion profile may comprise at least one notch, in particular one notch on each side of the extrusion profile in width direction, in particular for prepositioning the at least one bridge side plates prior to connecting it to the bridge.

Additionally or alternatively to the at least one bridge side plate, the bridge preferably comprises a bridge rear plate. The bridge rear plate is preferably made of metal, in particular aluminum. The bridge rear plate may be a sheet, in particular a meal sheet, more in particular an aluminum sheet. In particular, the bridge rear plate may have a thickness of between 1 mm and 5 mm, preferably between 1,5 mm and 3 mm, for instance 2 mm. The extrusion profile may comprise a notch for receiving an edge of the bridge rear plate. In particular, the notch may extend along at least 60%, 70%, 80%, 90% or 100% of the extension of the extrusion profile, in particular parallel to the width direction.

The bridge rear plate may further comprise a support shoulder for supporting the platform in at least one of the transport position, the entry positions and positions in between the transport position and the entry position. The support shoulder may extend along at least 60%, 70%, 80%, 90% or 100% of the extension of the extrusion profile, in particular parallel to the width direction and/or may extend substantially parallel to the walk-on part of the extrusion profile.

Preferably, the bridge rear plate comprises a bottom being offset, in particular in a direction normal to the support shoulder and/or the walk-on part of the bridge, from the support shoulder and/or the walk-on part of the bridge, in particular offset by at least 20 mm, 30 mm, 40 mm or 50 mm. The bottom may extend along at least 60%, 70%, 80%, 90% or 100% of the extension of the extrusion profile, in particular parallel to the width direction. The space between the bottom and the support shoulder and/or the walk-on part of the bridge may be at least 60%, 70%, 80%, 90% or 100% of the extension of the bridge in a direction normal to the support shoulder. Thereby, the space can be used for housing parts of the bridge, in particular a reinforcing part, such as a steel inlay, and/or a part of a locking mechanism, in particular an electric actuator. Preferably, the bottom extends in a longitudinal direction along at least 100 mm, 150 mm or 200 mm, in particular to allow housing the previously mentioned parts of the bridge.

The bridge rear plate may further comprise a first connection part connecting the bottom with the extrusion profile, in particular the previously described notch of the extrusion profile. The first connection part may extend inclined to the bottom, in particular inclined by between 30° and 60°, and/or may extend parallel to a support shoulder (in particular for supporting the first connection part on the extrusion profile) of the extrusion profile. Additionally or alternatively, the bridge rear plate may comprise a second connection part connecting the bottom with the support shoulder of the bridge rear plate. The second connection part may extend substantially orthogonal to the bottom. "Substantially orthogonal" as used herein is in particular intended to cover a deviation from a perfect orthogonal alignment of up to 20°, 15°, 10°, 5°, 3° or 1°. The first and/or second connection part may extend along at least 60%, 70%, 80%, 90% or 100% of the extension of the extrusion profile, in particular parallel to the width direction.

In a preferred embodiment, the bridge comprises a cavity. The cavity may, in particular in the transport position and/or the entry position, be covered by the platform and/or be accessible, in particular form the side being covered by the platform in the transport position and/or the entry position, when the platform is in passive position. Additionally or alternatively, the cavity may be delimited in a thickness direction, in particular opposite to the side being covered by the platform in the entry position and/or the transport position, by the bottom of the bridge rear plate. Additionally, or alternatively, the cavity may be delimited in longitudinal direction at one side by the extrusion profile and optionally at the opposite side by the second connecting part of the bridge rear plate and/or in a width direction from at least one side, preferably both sides, by bridge side plates. Preferably, the cavity of the bridge houses a part of a locking mechanism, in particular an actuator, and/or a reinforcing part, in particular an inlay, more in particular a steel inlay. Particularly preferred, the cavity extends in thickness direction by at least 20 mm, 30 mm, 40 mm or 50 mm, in longitudinal direction by at least 100 mm, 150 mm or 200 mm and/or in width direction by at least 60%, 70%, 80%, 90% or 100% of the extension of the extrusion profile, in particular parallel to the width direction. Thanks to such dimensions of the cavity the bridge may advantageously be used for housing functional parts, such as at least one reinforcing part, in particular a steel inlay, and/or a part of a locking mechanism, in particular an actuator.

In a first implementation of the foldable ramp according to the first aspect, the extrusion profile comprises a rotation shaft channel for receiving a shaft being rotatably mounted to the passenger car. Preferably, the rotation shaft channel has a non-circular cross-section, in particular a D-shaped cross-section. A D-shaped cross section may be understood as a circular cross section with a part of the circle being cut away. Additionally or alternatively, a D-shaped cross section may be understood as a cross section comprising a circular section, in particular extending over at least 180°, preferably at least 210°, and a liner section connecting the end points of the circular section, in particular to form a closed cross section. The specific configuration of the rotation shaft channel, particularly its non-circular cross-section, enhances the mechanical connection between the shaft and the bridge. The non-circular, especially D-shaped, cross-section provides a more secure and stable rotational interface, reducing the likelihood of slippage and ensuring precise alignment during the folding and unfolding processes. The inclusion of a non-circular cross-section in the rotation shaft channel is a significant enhancement over traditional circular channels, as it offers improved torque transmission and resistance to rotational misalignment. Further to that, in particular compared to a polygonal cross section, the D-shape cross section simplifies the assembly process, as it provides a clear orientation for the shaft, reducing the potential for incorrect installation.

In a further implementation of the foldable ramp according to any of the preceding claims according to the first aspect, the extrusion profile comprises a corrugated surface, in particular wherein the corrugated surface extends between the platform and the car. In particular the corrugated surface is generated directly in the extrusion process, in particular by using an extrusion dye defining the corrugated surface. The skilled person can distinguish between a corrugated surface resulting from the extrusion process and corrugated surfaces being integrated afterwards, for example by the surface structure of the corrugated surface. Preferably, the corrugated surface is part of, in particular realizes, a walk-on part of the profile, in particular a walk-on part of the profile as described above. In particular, the corrugated surface may comprise a plurality of rills, which may also be referred to as creases or furrows, in particular extending parallel to the rotation axis, in particular parallel to the width direction and being spaced from each other, in particular in length direction, by between 0,5 mm and 10 mm, in particular by between 1 mm and 5 mm, 1 mm and 3 mm or 1 mm and 2 mm. Further, the rills may extend between 0,5 mm and 10 mm, in particular by between 1 mm and 5 mm, 1 mm and 3 mm or 1 mm and 2 mm, in a thickness direction, in particular - with respect to the upper surface of the walk-on part - into the extruded profile. The rills may extend along at least 60%, 70%, 80%, 90% or 100% of the extension of the extrusion profile, in particular parallel to the width direction. The integration of the corrugated surface into the extrusion profile reduces the space requirements of the bridge, as no additional part, protruding from the bridge, is required to realize the corrugated surface.

In a further implementation of the foldable ramp according to the first aspect, the extrusion profile comprises at least one slot, preferably at least two slots, for connecting the extrusion profile with at least one other part, in particular with a reinforcing part, such as an inlay, in particular a steel inlay, of the bridge. The at least one slot within the extrusion profile facilitates the connection between the extrusion profile and the other part. The slot preferably carries at least one nut, wherein the extrusion profile is connected to the further part by connecting means, in particular by at least one screw, extending through the further part and engaging, in particular being screwed into, said at least one nut. This particularly brings the advantage of facilitating the assembly and disassembly of the ramp, allowing for easier maintenance and potential replacement of individual components if necessary. The at least one slot preferably extends along at least 60%, 70%, 80%, 90% or 100% of the extension of the extrusion profile, in particular parallel to the width direction.

Additionally or Alternatively, the slot is preferably implemented in a side of the extrusion profile facing a cavity of the bridge, in particular the previously described cavity. Particularly preferred, the slot comprises a cavity extending in width direction of the bridge. The cavity is preferably configured to carry the at least one nut, in particular in that the at least one nut is longitudinally movable in width direction along the cavity, in particular prior to being fixed in a position by connecting means, such as a screw. Further, the slot preferably comprises a longitudinal slit allowing connecting means, in particular screws, to extend from the other part, in particular the reinforcing part, through the slit into the cavity of the slot.

The subject matter involves a foldable ramp designed for wheelchair access to a passenger car's rear door. The ramp includes a platform that can be positioned in various configurations, such as an entry position where the platform is extended out of the car to facilitate wheelchair access, a transport position where the platform is positioned upright within the car, and a passive position where it lies flat inside the car. A bridge is used to rotatably connect the platform to the passenger car, and this bridge is characterized by an extrusion profile. The extrusion profile, which forms part of the bridge, is enhanced by incorporating at least one slot, with a preference for at least two slots. These slots serve as connection points for attaching the extrusion profile to at least one other part, particularly a steel inlay, which is part of the bridge. This feature introduces a modular and versatile method for assembling the bridge, allowing for the integration of additional components or reinforcements, such as a steel inlay, which can enhance the structural integrity and durability of the bridge. The slots in the extrusion profile provide flexibility in design and manufacturing, as they allow for easy attachment and detachment of parts, facilitating maintenance and customization. Moreover, the use of slots can simplify the assembly process by providing predefined connection points, reducing the need for additional fastening mechanisms and lowering production costs. The inclusion of a steel inlay as a reinforcing part suggests an improvement in the strength and stability of the bridge, which is beneficial for supporting the weight and movement of the platform as it transitions between different positions.

In a further implementation of the foldable ramp according to the first aspect, the extrusion profile comprises at least one notch, preferably at least two notches, for receiving at least one other part, in particular a bridge side plate and/or a bridge rear plate, of the bridge.

The at least one notch provides a precise and defined location for the attachment of the side and rear plates, which can improve the ease of assembly and maintenance of the ramp system. By incorporating at least one notch into the extrusion profile, the design allows for a modular approach to the construction of the bridge, enabling different configurations or adjustments to be made with relative ease.

In one embodiment, the at least one notch is designed to receive a bridge rear plate, in particular the previously described bridge rear plate. In this case, the notch can be referred to as "rear plate receiving notch". The rear plate receiving notch preferably extends in width direction along at least 60%, 70%, 80%, 90% or 100% of the extension of the extrusion profile. The rear plate receiving notch can have a notch thickness and a notch depth. The notch thickness is preferably between 90 % and 150%, more preferably between 100 % and 130%, most preferably between 100% and 110 %, of the thickness of the rear plate. The notch depth may extend between 3 mm and 50 mm, preferably between 5 mm and 30 mm, more preferably between 8 mm and 20 mm. By the previously described dimensions, the rear plate receiving notch may advantageously be used to preposition the bridge rear plate by inserting the bridge rear plate into the notch. Preferably the bridge rear plate receiving notch receives a part, in particular the previously described first connection part, of the bridge rear plate connecting the bridge rear plate bottom with the extrusion profile. Preferably, the notch extends, in particular in depth direction, parallel to the first connection part and/or to a support shoulder of the extrusion profile. The support shoulder of the extrusion profile preferably extends parallel to the previously described first connection part of the bridge rear plate, in particular to support that part against the extrusion profile.

In an embodiment, which is preferably combined with the previous embodiment, the extrusion profile comprises at least one notch being designed to receive a bridge side plate, in particular the previously described bridge side plate. In this case, the notch can be referred to as "side plate receiving notch". The at least one "side plate receiving notch" may be realised as a cut out section in the extrusion profile. Preferably, the cut out section is larger, in width direction, than the extension of the bridge in width direction, in particular to allow parts mounted to the side plate, for example a pin of a pin groove arrangement of a pivot mechanism, to extend into the notch. For this purpose, the side plate receiving notch may be embodied as cut out section extending from one face side of the extrusion profile in width direction towards the middle of the extrusion profile along at least 200%, 300%, 500%, 800%, 1000%, 1500% or 2000% of the extension of the bridge side plate in width direction and/or along between 10 mm and 5.000 mm, preferably between 20 mm and 3.000 mm, more preferably between 50 mm and 1.500 mm. Preferably the cross section of the cut-out section substantially, in particular exactly, corresponds to the shape of the section of the bridge side plate extending into the at least one side plate receiving notch. This makes assembly of the bridge substantially easier as the corresponding shape makes it easy to position the bridge side plate in the correct orientation.

In a further implementation of the foldable ramp according to any of the preceding claims according to the first aspect, the extrusion profile comprises at least one, preferably at least two or three, screw holes, in particular on each side of the extrusion profile along a rotation axis of the bridge, for connecting at least one part, in particular a bridge side plate, in particular on each side of the bridge along a rotation axis of the bridge, with the extrusion profile. These screw holes facilitate the connection of at least one part, specifically a bridge side plate, with the extrusion profile. This enhances the ease of assembly of the foldable ramp. By specifying the presence of screw holes, the design allows for a more secure and stable connection between the bridge side plates and the extrusion profile, ensuring that the ramp remains firmly attached and aligned during use. Furthermore, the inclusion of multiple screw holes, preferably on each side, distributes the load more evenly across the bridge, which can improve the durability and longevity of the ramp. Preferably, the screw holes are formed into the bridge directly with the extrusion profile, in particular so that the screws can be directly screwed into the holes without need of further manufacturing steps, such as providing the holes with threads. Preferably, the screw holes are free of threads prior to screwing screws therein. Preferably the screws holes may have a substantially cylindrical shape, in particular wherein the cylindrical shape may be not completely closed, for instance may only extend in circumferential direction - with respect to a cylinder axis of the screw holes - along between 270 ° and 350°, preferably between 290 ° and 330°. This makes it easier and cheaper to produce the screw holes within the extrusion process, in particular without the need of further processing steps after extrusion, and makes it easier to establish a strong connection via the screw holes with reduced effort. Preferably at least one bridge side plate, more preferably two bridge side plate, in particular as described above, are connected to the bridge via connecting means, in particular screws, to the bridge by threading screws through the at least one bridge side plate into the thread holes.

In a further implementation of the foldable ramp according to the first aspect, the extrusion profile is a hollow profile with closed cross-section and/or is extruded in a direction parallel to a rotation axis of the bridge. This particularly implies that the profile is not solid but rather has an internal cavity, enhancing its strength-to-weight ratio. This design choice can provide structural integrity while minimizing the weight of the bridge, which is beneficial for ease of operation and efficiency in folding and unfolding the ramp. Furthermore, the profile is extruded in a direction parallel to the rotation axis of the bridge, particularly indicating that the manufacturing process aligns the extrusion direction with the axis around which the bridge rotates. This alignment can contribute to the mechanical robustness of the bridge, as the material properties are optimized along the axis of rotation, potentially reducing stress and wear during operation. The hollow closed cross-section of the extrusion profile not only aids in weight reduction but also in maintaining the necessary rigidity and durability for repeated use. By extruding the profile in alignment with the rotation axis, the design ensures that the bridge can withstand the rotational forces encountered during the transition of the platform between its different positions.

In a further implementation of the foldable ramp according to any of the preceding claims according to the first aspect, the extrusion profile comprises or consists of aluminium or an aluminium alloy. The choice of aluminium or its alloys for the extrusion profile introduces several notable features and advantages. Aluminium and its alloys contribute to the overall reduction in weight of the ramp system, making it easier to handle and operate. This is particularly beneficial in automotive applications where weight savings can lead to improved fuel efficiency and ease of use. Furthermore, aluminium alloys offer excellent corrosion resistance, which is crucial for components exposed to varying environmental conditions, such as a ramp that may be used in outdoor settings. This resistance to corrosion ensures the longevity and durability of the ramp, reducing maintenance needs and enhancing safety over time. Additionally, aluminium's strength-to-weight ratio is favourable, providing the necessary structural integrity to support the weight of a wheelchair and its occupant while maintaining a manageable weight for manual operation. The use of an extrusion profile allows for precise control over the shape and dimensions of the bridge, enabling the design of custom profiles that can optimize the mechanical properties and functionality of the ramp. This flexibility in design can lead to improved integration with the vehicle and enhanced user experience. Overall, the incorporation of aluminium or aluminium alloys in the extrusion profile of the bridge not only enhances the mechanical performance and durability of the ramp but also aligns with the automotive industry's goals of lightweight, efficient, and sustainable design solutions.

A second aspect of the invention, which may be combined with the first aspect and its embodiments and vice versa, provides a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position and a bridge for rotatably connecting the platform with the passenger car, wherein the bridge comprises at least one aluminium part, at least one plastic part and at least one reinforcing part, in particular steel part, connecting the at least one plastic part with the at least one aluminium part. The reinforcing part particularly serves to connect the plastic and aluminium components, enhancing the overall strength and durability of the bridge. Without the reinforcing part, the connection of the plastic part with the aluminium part may be to weak to withstand the forces acting on the bridge during operation and when moving the platform between its several positions. The use of aluminium provides a lightweight yet strong structure, while the plastic part offers flexibility and resistance to environmental factors such as corrosion. The reinforcing part ensures that the connection between the aluminium and plastic parts is robust, thereby enhancing the overall stability and longevity of the ramp. This combination of materials results in a ramp that is not only durable and reliable but also easy to handle and store, making it highly advantageous for users requiring wheelchair access to passenger cars. Preferably, the aluminium part is the previously described extrusion profile, wherein the at least one plastic part, in particular at least two plastic parts, comprise the previously described bridge side plate, preferably the two bridge side plates. The at least one reinforcing part, preferably at least two reinforcing parts, may be a reinforcing inlay, preferably at least two reinforcing inlays. The at least one reinforcing inlay is preferably located in a cavity of the bridge, in particular in the previously described cavity of the bridge. Preferably, the reinforcing inlay is connected to the extrusion profile, preferably by means of the previously described slots in the extrusion profile, in particular by screws engaging with nuts in the slots, e.g. as described above.

Further, the at least one plastic side plate is preferably connected to the reinforcing inlay, preferably by connecting means, such as screws. In particular thereby, the plastic side plates are preferably indirectly connected to the extrusion profile, namely via the reinforcing inlay. In addition, in particular to further increasing the robustness of the bridge, the side plate may be directly connected to the bridge, in particular by screws, e.g. by the previously described screw holes.

The reinforcing inlay is preferably made from metal, in particular from a metal with a higher tensile strength than aluminium, preferably made from steel. **In** particular, the reinforcing inlay may comprise or consist of steel. Additionally, or alternatively, the reinforcing inlay may have a rectangular shape. In particular the reinforcing inlay may comprise at least two connecting walls, in particular one connecting wall facing the at least one plastic side plate and one connecting wall facing the extrusion profile. Preferably, each of the wall is connected to the part it faces, e.g. by screws. Additionally, or alternatively, the reinforcing inlay preferably comprises at least one connecting wall facing, preferably being connected, e.g. by screws, to the bridge rear plate, in particular to a bottom, e.g. the previously described bottom, of the bridge rear plate. Additionally, or alternatively an actuator, in particular of a locking mechanism, is connected to the reinforcing inlay. Particularly preferred, the reinforcing inlay is located completely inside a cavity of the bridge, e.g. the previously described cavity. The expression "located completely inside" in this respect may be understood in that, when the platform is in transport position and/or entry position, the reinforcing inlay is housed/encased from all sides by the bridge and the platform.

In a first implementation of the foldable ramp according to the second aspect, the at least one plastic part is a bridge side plate carrying and/or guiding a pin of a pivot mechanism of the foldable ramp, in particular of the previously and subsequently described pivot mechanism. The pivot mechanism supports the foldable ramp's ability to transition between its various positions. The use of plastic for the side plate may offer benefits such as reduced weight compared to metal alternatives, which can enhance the overall ease of handling and operation of the ramp. Additionally, plastic materials can provide flexibility and resilience, improving the durability of the pivot mechanism by absorbing stresses and reducing wear on the pin. Furthermore, the guiding function of plastic side plate ensures precise alignment and smooth operation of the pivot mechanism, which is beneficial for the reliable deployment and retraction of the ramp. By integrating the plastic side plate with the pivot mechanism, the design may also allow for more efficient manufacturing processes, as plastic components can be moulded into complex shapes with high precision. In combination with the reinforcing part, these advantages of a plastic side plate can be used without weakening the overall robustness of the bridge.

In a further implementation of the foldable according to the second aspect, the at least one aluminium part is an extrusion profile and/or a bridge rear plate, in particular the extrusion profile and/or the bridge rear plate as described above and/or below. Providing the aluminium part as extrusion profile is advantageous as the extrusion process allows for the creation of complex cross-sectional shapes, which can enhance the structural integrity and reduce the weight of the bridge. Using an extrusion profile provides a high strength-to-weight ratio, which is particularly beneficial in applications requiring both durability and ease of handling, such as in foldable ramps for wheelchair access. Furthermore, the inclusion of a bridge rear plate as a potential aluminium part suggests a design that can provide additional structural support and rigidity to the bridge assembly. The bridge rear plate can serve as a crucial component in distributing loads and stresses, thereby enhancing the overall stability and safety of the ramp. The combination of aluminium, plastic, and steel parts within the bridge not only leverages the advantageous properties of each material-such as the lightweight and corrosion resistance of aluminium, the flexibility and moldability of plastic, and the high tensile strength of steel-but also ensures a robust and reliable connection between the platform and the passenger car. This multi-material construction leads to improved performance, longevity, and user experience, making the foldable ramp more efficient and user-friendly.

In a further implementation of the foldable according to the second aspect, the at least one reinforcing part is an inlay being at least partially enclosed by the at least one aluminium part and the at least one plastic part, in particular the aluminium extrusion profile and/or the plastic side plate as described above and/or below. This configuration suggests a mechanism of communication between the components where the reinforcing inlay particularly serves as a structural core or backbone, providing enhanced strength and rigidity to the bridge. The enclosure of the inlay by the aluminium and plastic parts implies a composite structure where the materials work in concert to achieve a balance of strength, weight, and durability. The aluminium part contributes to the lightweight nature and corrosion resistance of the bridge, while the plastic part may offer flexibility and ease of manufacturing. The reinforcing inlay, particularly if made of steel, adds significant tensile strength and resistance to deformation under load, which is beneficial for supporting the weight of a wheelchair and its occupant. This structural arrangement enhances the overall robustness of the ramp, ensuring it can withstand repeated use and various environmental conditions. By integrating the reinforcing part as an inlay, the design minimizes the overall weight of the bridge while maximizing its load-bearing capacity, which is a particularly beneficial combination for automotive applications.

In a further implementation of the foldable ramp according to the second aspect, the plastic part comprises or consists of a Polyamide. The Polyamide can be Sustamid^{®} 6G from the company Röchling. Polyamide, particularly Sustamid^{®} 6G, provides high mechanical strength, rigidity, and thermal stability, making it a beneficial material for the bridge side plates as they must endure significant stress and environmental exposure. By incorporating Polyamide, the ramp benefits from enhanced durability and longevity, as well as improved performance under varying conditions. The use of Sustamid^{®} 6G specifically offers additional benefits such as reduced wear and friction, which can contribute to smoother operation and reduced maintenance needs over time.

A third aspect of the invention, which may be combined with the first aspect and its embodiments and vice versa, provides a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, at least one locking mechanism with a locked state, in which a movement of the platform from the transport position into the passive position and/or into the entry position is blocked, and a release state, in which the platform can move from the transport position into the passive position and/or into the entry position, and at least one electric actuator for switching from the locked state into the passive state or vice versa.

In particular, the at least one locking mechanism has a locked state that prevents the platform from moving between the transport position and the passive and/or the entry positions. **In** particular, in the release state, the platform can transition between these positions. The electric actuator is in particular responsible for switching the locking mechanism between the locked and release states, thereby facilitating or restricting the movement of the platform as necessary. The advantages of this design include enhanced convenience and safety, as the electric actuator allows for automated control of the platform's movement, reducing the need for manual intervention and ensuring secure positioning during transport.

In a first implementation of the foldable ramp according to the third aspect, the at least one locking mechanism comprises a wire that, when the electric actuator is actuated, pulls a locking means of the at least one locking mechanism causing the locking mechanism to switch from the locked state into the release state or vice versa. In particular, when the electric actuator is engaged, the wire exerts a pulling force on a locking means within the locking mechanism. In particular, the pulling force directly causes the transition of the locking mechanism from the locked state to the release state or vice versa. The introduction of the wire as a communication mechanism between the electric actuator and the locking means adds a layer of mechanical interaction that is both precise and reliable. Further, it provides the option to use the wire for the implementation of an emergency lever as described in detail below. Such wire particularly enhances the functionality of the foldable ramp by ensuring that the transition between states is not only electrically controlled but also mechanically executed through a direct pulling action. This mechanical linkage via the wire ensures that the actuator's electrical signal is effectively translated into a physical movement, thereby improving the responsiveness and reliability of the locking mechanism. Preferably, the electric actuator and the locking means are located to each other in that, between the locking means and the electric actuator, the wire extends straight or with a curvature of 270° or less, preferably 210° or less, more preferably 180° or less, even more preferably 150° or less, most preferably 120° or less or 90° or less. By limiting the curvature of the wire, the design can be made less complex and the force transmission can be made direct, in the case of a straight extension, or more direct, in the case of an existing but limited curvature. For example, in a first locking mechanism with a locked state, in which a movement of the platform from the transport position into the entry position is blocked, and a release state, in which the platform can move from the transport position into the entry position, the curvature of the wire can be limited to 270° or less, preferably 210° or less, more preferably 180° or less, even more preferably 150° or less, most preferably 120° or less or 90° or less. This can be achieved for example by locating the electric actuator in that the wire enters in a horizontal extension into the electric actuator while the locking means can be located in that the wire enters in a vertical extension into the locking means. Additionally or alternately, in a second locking mechanism with a locked state, in which a movement of the platform from the transport position into the passive position is blocked, and a release state, in which the platform can move from the transport position into the passive position, the wire between the electric actuator and the locking means may extend straight. This may for example be achieved by locating the electric actuator in that the wire, the electric actuator and the locking means are located on a same side of a bridge side plate, in particular in that the wire extends in an angle between 0° and 45°, in particular between 10° and 30° relative to a vertical.

In a further implementation of the foldable ramp according to third aspect, the foldable ramp comprises an emergency lever for switching independently from the electric actuator from the active state into the passive state or vice versa, in particular wherein the electric actuator and the emergency lever pull, when actuated, a common wire, in particular the previously described wire, of the at least one locking mechanism causing the locking mechanism to switch from the locking state into the release state or vice versa. **In** particular, the emergency lever, when actuated, pulls a common wire of the locking mechanism, causing the locking mechanism to switch between the locked state and the release state. This particularly ensures that the ramp can still be operated manually in case of an electrical failure or other issues with the electric actuator, thereby enhancing the reliability and safety of the ramp. The emergency lever and the electric actuator particularly share a common wire, which simplifies the design and ensures that both manual and electric operations affect the same locking mechanism. This redundancy in operation mechanisms provides an additional layer of security and convenience, ensuring that the ramp remains functional under various conditions. The ability to switch the locking mechanism between states using either the electric actuator or the emergency lever ensures that the ramp can be operated efficiently and safely, regardless of the availability of electrical power. Preferably, the emergency lever is located in that it is accessible by a person when the platform is in a transport position, in particular by a person in a wheelchair inside the passenger car when the platform is in transport position. Particularly preferred the at least one locking mechanism comprising the emergency lever is a locking mechanism blocking, in locked state, a movement of the platform from the transport position into the entry position. Preferably, in embodiments with at least two locking mechanisms, in particular on opposite sides of the ramp in width direction, each of the two locking mechanisms comprise an own emergency lever.

In a further implementation of the foldable ramp according to the third aspect, the at least one electric actuator and/or at least one locking means, in particular a latch lock, of the locking mechanism is/are fixedly connected to the passenger car, preferably wherein the platform is located in between two electric actuators and/or two locking means of at least two locking mechanisms being fixedly connected to the passenger car. A fixed connection in particular implies a structural integration where the components are securely attached to the vehicle, enhancing stability and reliability. The position of the platform between two electric actuators and/or two locking means, particularly provides a redundant or fail-safe mechanism, ensuring that the ramp remains securely locked or reliably transitions between positions as needed. This particularly contributes to safety and user confidence, especially when the ramp is used for wheelchair access.

In a further implementation of the foldable ramp according to the third aspect, the at least one electric actuator and/or at least one locking means, in particular latch lock, of the locking mechanism is/are covered by a plate forming a sealing edge with a sealing profile of a bridge, in particular of a bridge rear plate, of the foldable ramp. The covering plate serves as a protective barrier, shielding the electric actuator and the locking means from external elements such as dust, moisture, and debris, which could otherwise impair their functionality. By forming a sealing edge with the sealing profile of the bridge, the plate further ensures that the components in the bridge and in the interieur of the passenger car are protected from external elements, such as dust, when the platform is in transport or passive position. Furthermore, the sealing may help in noise reduction by minimizing the rattling or clanking sounds that could occur during the movement of the ramp and/or of the passenger car. Preferably, the sealing profile is located at least partially in a cavity of the bridge, in particular the previously described cavity, preferably at least partially on the bottom of the bridge rear plate, an extrusion profile, in particular the previously described extrusion profile, and/or a connecting part of the bridge rear plate, in particular the previously described first connecting part between the bridge rear plate bottom and the extrusion profile.

In a further implementation of the foldable ramp according to the third aspect, the locking mechanism comprises at least one pin being fixedly connected to a bridge, in particular a bridge side plate, which engages with a locking means, in particular a latch lock, of the locking mechanism for blocking a movement of the platform, in particular from the transport position into the entry position. The latch lock particularly acts as the locking means, providing a mechanical barrier that prevents the platform from moving when in the locked state. This interaction ensures that the platform remains in the desired position until the locking mechanism is switched to the release state, allowing movement. The use of a bridge side plate as a connection point for the pin adds structural integrity to the mechanism, ensuring that the platform remains securely locked in place when necessary. Preferably, the pin is connected to the previously described bridge side wall. The latch lock preferably comprises a latch and a lock being movable relative to each other. Preferably the latch is movable, in particular pivotable, preferably in that the actuation of the electric actuator and/or the emergency lever causes the latch to move, in particular pivot, into a release position, in particular allowing the pin to leave the lock.

In a further implementation of the foldable ramp according the third aspect, the at least one electric actuator is located inside a bridge, in particular in between two side plates of a bridge, of the foldable ramp, in particular wherein the electric actuator, when actuated, pulls a locking means of the locking mechanism via a wire extending through a hole in at least one of the bridge side plates. Preferably, the at least one electric actuator is located in a cavity, in particular the previously described cavity of the bridge. Particularly preferred, at least two electric actuators are located inside the bridge, in particular inside the cavity of the bridge, in particular on opposite sides of the bridge in width direction. Positioning the at least one electric actuator inside the bridge, specifically situated between two side plates of the bridge, allows for a more compact and integrated design, enhancing the overall functionality and aesthetic of the ramp. The electric actuator, when activated, preferably engages with a locking means of the locking mechanism through a wire that extends through a hole in one of the bridge side plates. This mechanism of communication between the electric actuator and the locking means via the wire ensures a reliable and efficient transfer of motion, facilitating the transition between the locked and release states of the ramp and allows positioning components, such as the previously described latch lock outside of the bridge. The inclusion of the electric actuator within the bridge not only protects it from external elements and potential damage but also contributes to the streamlined design of the ramp. The wire extending through the hole in the bridge side plate provides a direct and controlled path for the actuation process, minimizing the risk of mechanical failure and ensuring consistent performance. This feature brings a significant improvement in terms of operational reliability and ease of use, as the electric actuator can be precisely controlled to engage or disengage the locking mechanism, thereby allowing for smooth transitions between the various positions of the platform. The integration of the electric actuator within the bridge also simplifies the overall assembly and maintenance of the ramp, as it reduces the number of exposed components and potential points of failure. **In** an alternative implementation, the at least one electric actuator is connected to a bridge side plate, in particular on the same side of a bridge side plate carrying locking means of the locking mechanism and/or on the side of the bridge side plate facing away from the inside of a bridge and/or the passenger car, in particular wherein the electric actuator, when actuated, pulls the locking means via a wire. This may allow for a compact design as well, in particular if the bridge side plate is offset towards the inside of the bridge, in particular to an extent allowing positioning the electric actuator in the space provided by the offset of the bridge side plate. In such implementation with offset of the bridge side plate, the electric actuator may be seen as also located inside the bridge, even though not being located between two bridge side plates but rather on their outside, thereby also profiting from the previously described benefits of locating the electric actuator inside the bridge. Further to that, this implementation bears the advantage of providing a straight extension of a wire connecting the locking means with the electric actuator thereby providing a less complex design with direct force transmission between the electric actuator and the locking means.

In a further implementation, the locking mechanism can comprise a locking means sensor, in particular a latch lock sensor. The locking means sensor may be designed to detect the state of the locking mechanism, in particular to detect whether the locking mechanism is in locked state or in passive state. Depending on the state detected by the sensor, the locking mechanism can be designed to emit an alert signal when, for example, the locked state is detected but a user commands the ramp to move from the transport position into the entry position and/or to prohibit such movement as long as the locked is not achieved. The other way around, when a user commands the ramp to move from the transport position into the passive position while the sensor detects a locked state, an alert signal may be emitted or the movement may be prohibited. By these means, the risk of damaging the ramp can be reduced.

In a further implementation of the foldable ramp according to the third aspect, the at least one locking mechanism comprises at least one locking means that, when the locking mechanism is in locking state, blocks the movement of the platform by directly engaging with a pin of a pivot mechanism of the foldable ramp moving translationally, in particular relative to a bridge of the ramp, when the ramp moves, in release state, from the transport position into the passive position. Preferably, the pivot mechanism is realized as described above and below. Particularly preferred the pin moves, when the platform moves from the transport position into the passive position and vice versa, along a curved groove, in particular as described above and below. The engagement between the locking means and the pin of the pivot mechanism provides a tangible and mechanical method of blocking and allowing movement, ensuring that the platform remains securely in place when necessary and can be repositioned when desired. The introduction of this specific locking means enhances the functionality of the ramp by providing a reliable mechanism for controlling the movement of the platform. This feature ensures that the platform remains stable during transport and can be easily transitioned to the passive position when needed. The translational movement of the pin relative to the bridge of the ramp adds an additional layer of mechanical complexity and precision, allowing for smooth and controlled transitions between positions. This enhancement is particularly beneficial in ensuring the safety and reliability of the ramp, as it prevents unintended movement of the platform, thereby reducing the risk of accidents or malfunctions.

In a further implementation of the foldable ramp according to the third aspect, the foldable ramp comprises at least one first, preferably at least two, locking mechanism with a locked state, in which a movement of the platform from the transport position into the entry position is blocked, and a release state, in which the platform can move from the transport position into the entry position, and at least one, preferably at least two, second locking mechanism with a locked state, in which a movement of the platform from the transport position into the passive position is blocked, and a release state, in which the platform can move from the transport position into the passive position. Preferably the at least one first locking mechanism is at least partially connected to the passenger car, in particular as described above, while the at least one second locking mechanism is preferably at least partially located inside the bridge, in particular as described above. The first locking mechanism is particularly beneficial as it provides a locked state to prevent unintended deployment of the ramp, thereby ensuring the safety of the vehicle's occupants and the integrity of the ramp during transport. Additionally, the first locking mechanism has a release state, allowing the platform to move from the transport position into the entry position when needed, facilitating the use of the ramp for wheelchair access. Furthermore, the subject matter incorporates at least one second locking mechanism, preferably at least two, which serves a similar purpose but focuses on the movement of the platform from the transport position into the passive position. This second locking mechanism also features a locked state, preventing the platform from shifting into the passive position inadvertently, which is beneficial for maintaining the platform's stability and preventing potential damage or injury. The release state of the second locking mechanism permits the platform to transition from the transport position into the passive position when required, allowing for the ramp to be stowed away safely and efficiently within the vehicle. The inclusion of these dual locking mechanisms, each with their respective locked and release states, introduces a higher level of control and versatility to the foldable ramp, ensuring that it can be securely positioned and transitioned between its various states as needed. This dual mechanism system not only enhances the operational reliability of the ramp but also contributes to the overall safety and convenience for users, particularly those relying on the ramp for wheelchair access.

In a further implementation of the foldable ramp according to the third aspect, the foldable ramp comprises at least one processor, and at least one memory storing instructions that, when executed by the at least one processor, cause the foldable ramp at least to perform processing an indication indicating that the at least one electric actuator is and/or was actuated. These components are preferably programmed with instructions that, when executed by the processor, enable the ramp to process an indication related to the actuation of the electric actuator. In particular a communication mechanism between the processor and the electric actuator is provided, where the processor receives or detects a signal or data point indicating that the actuator has been or is being actuated. This communication allows for a more intelligent and automated operation of the ramp, as the processor can potentially make decisions or trigger further actions based on the actuator's status. The introduction of a processor and memory storing executable instructions elevates the ramp's functionality by potentially allowing for more complex operations and interactions. This could include logging the actuation events for maintenance purposes, providing feedback to a user interface, or integrating with other vehicle systems for enhanced accessibility features. The ability to process indications of actuator actuation suggests that the system could be designed to monitor the status of the ramp and ensure it operates correctly, potentially enhancing safety and reliability. This feature could also allow for remote diagnostics or updates to the ramp's operating software, adding a layer of adaptability. Overall, the inclusion of a processor and memory in the foldable ramp system introduces a level of sophistication that supports advanced control and monitoring capabilities, making the ramp not only a mechanical device but also a smart system capable of interacting with its environment and users in a meaningful way.

In a further implementation of the foldable ramp according to the third aspect, the foldable ramp further comprising means, in particular a light source, for communicating an operational state of the foldable ramp, the means communicate an operational state, for instance a light or sound signal, when the at least one locking mechanism is in locked state. Preferably, the locking mechanism's state is switched by at least one electric actuator. The specific mechanisms of communication between components in the current subject matter involve the inclusion of means for communicating an operational state of the foldable ramp. These means, particularly a light source, are designed to communicate the operational state, such as a light or sound signal, when the locking mechanism is in the locked state. This particularly provides a communication mechanism that provides a clear and immediate indication of the operational state of the ramp, enhancing the usability and safety of the ramp by informing users when the locking mechanism is engaged. This feature ensures that users are aware of the ramp's status, preventing accidental movement or misuse. The light or sound signal serves as a direct and easily perceivable form of communication, which is particularly useful in ensuring that the ramp is securely locked before use. This enhancement not only improves the overall functionality of the ramp but also contributes to the safety and convenience of its operation, providing users with a reliable and intuitive means of understanding the ramp's current state.

### Brief description of drawings

The invention will be explained in detail by means of the following exemplary drawings showing in
- Fig. 1: a perspective view on a section of a floor of a passenger car and a foldable ramp according to the invention being connected to the passenger car, wherein the foldable ramp comprises a platform in transport position,
- Fig. 2: a side view on the foldable ramp shown in Fig. 1,
- Fig. 3: a side view on section A of the foldable ramp shown in Fig. 2, wherein the platform is in transport position,
- Fig. 4: a side view on section A of the foldable ramp shown in Fig. 2, wherein the platform is in an intermediate position between transport position and passive position,
- Fig. 5: a side view on section A of the foldable ramp shown in Fig. 2, wherein the platform is in passive position,
- Fig. 6: a side view along line B-B shown in Fig. 1 with the foldable ramp in an intermediate position between the transport position and the entry position, wherein the platform, the bridge side plate and the reinforcing part of the foldable ramp are faded out,
- Fig. 7: a side view along line B-B shown in Fig. 1 with the foldable ramp in the transport position, wherein the platform, the bridge side plate and the reinforcing part of the foldable ramp are faded out,
- Fig. 8: a perspective view on the inside of a bridge of a foldable ramp according to the first and second aspect of the present invention,
- Fig. 9: a perspective view on the inside of a bridge of a foldable ramp not according to the first and second aspect of the present invention,
- Fig. 10: a perspective view on the outside of a bridge of a foldable ramp according to the first and second aspect of the present invention,
- Fig. 11: a perspective side view on an extrusion profile of a bridge of a foldable ramp according to the first aspect of the invention,
- Fig. 12: a side view on an extrusion profile of a bridge of a foldable ramp according to the first aspect of the invention,
- Fig. 13: a perspective view on a bridge of the foldable ramp shown in Fig. 1 according to the first to the third aspect of the present invention,
- Fig. 14: a perspective view on a bridge of a foldable ramp not according to any of the first to the third aspect of the present invention,
- Fig. 15: a perspective view on the inside of section C of the bridge of the foldable ramp shown in Fig. 13 according to the third aspect of the present invention, wherein the platform is faded out to show the inside of the bridge,
- Fig. 16: a perspective view on the outside of section C of the bridge of the foldable ramp shown in Fig. 13 according to the third aspect of the present invention, wherein the platform is faded out to show the inside of the bridge,
- Fig. 17: an enlarged perspective view on section D of Fig. 16,
- Fig. 18: a side view on the outside of section C of the bridge of the foldable ramp shown in Fig. 13 according to the third aspect of the present invention,
- Fig. 19: a perspective view on the locking mechanism shown in Figs. 15 and 16,
- Fig. 20: a perspective view on a locking mechanism not according to the third aspect of the present invention,
- Fig. 21: an enlarged perspective view on the locking mechanism shown in section E of Fig. 1,
- Fig. 22: a perspective view on the inside of the locking mechanism shown in Fig. 21,
- Fig. 23: a side view on the inside of the locking mechanism shown in Fig. 21,
- Fig. 24: a perspective view on a locking mechanism not according to the third aspect of the present invention,
- Fig. 25: a perspective view on a platform of a foldable ramp according to the third aspect of the invention,
- Fig. 26: an enlarged view on section F of Fig. 25,
- Fig. 27: a side view on an alternative locking mechanism to the one shown in Figs. 15 to 19 when the ramp is in transport position,
- Fig. 28: a side view on an alternative locking mechanism to the one shown in Figs. 15 to 19 when the ramp is in passive position,
- Fig. 29: a perspective view from the outside on an alternative locking mechanism to the one shown in Figs. 21 to 23, and
- Fig. 30: a perspective view from the inside on an alternative locking mechanism to the one shown in Figs. 21 to 23.

### Preferred embodiments of the invention

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention. However, it will be apparent to those skilled in the art having the benefit of the present disclosure that the various aspects of the invention claimed may be practiced in other examples that depart from these specific details.

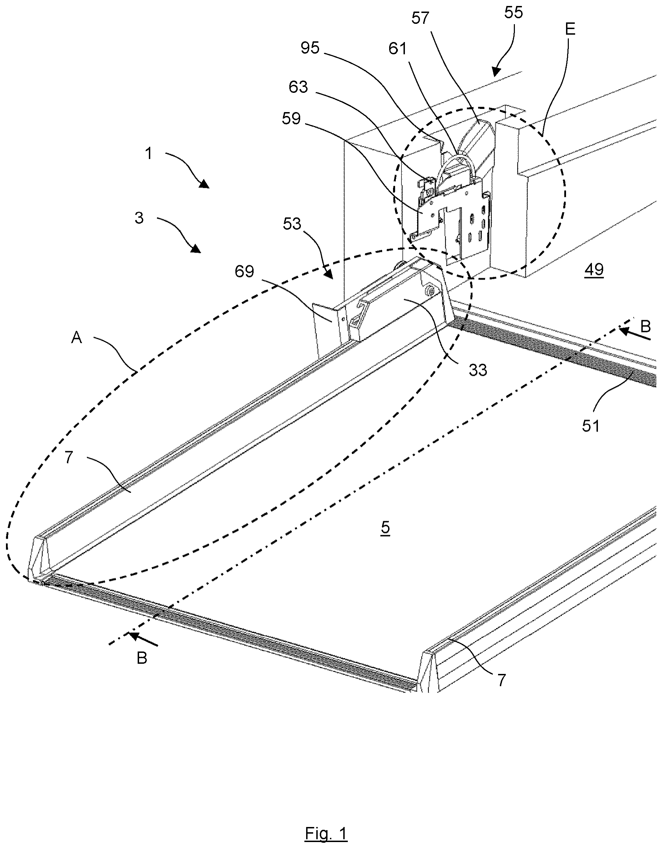

Fig. 1 shows a section of a floor 49 of a passenger car and a foldable ramp 1 for wheelchair access to the passenger car rear door according to the invention. The foldable ramp 1 is connected to the passenger car via a bridge 51, which in Fig. 1 has a corrugated surface to reduce the risk of slippage for a passenger or a wheelchair entering the passenger car from the platform 3 or the platform 3 from the passenger car. The foldable ramp comprises a platform 3 which can be arranged in several positions including an entry position wherein the platform 3 is folded out of the car to allow wheelchair access to the car, a transport position wherein the platform 3 is arranged in the car in an upright position and a passive position wherein the platform 3 is arranged in the car in a lying position. In Fig. 1 the platform 3 is arranged in entry position. The platform comprises a platform floor 5 and two platform side walls 7 protruding from the platform floor 5. The bridge 51 rotatably connects the platform 3 to the passenger car in that the platform 3 can rotate from the transport position into the entry position and vice-verse. The foldable ramp 1 further comprises a pivot mechanism 53 for transferring the platform between the transport position and the passive position and vice versa by a rotational translational movement. The pivot mechanism 53 is realised at least in part by a rail 33 of a slide-rail arrangement and a bridge side plate 69. The foldable ramp 1 further comprises two first locking mechanism 55, one of which is shown in Fig. 1, with a locked state, in which a movement of the platform 3 from the transport position into the passive position is blocked, and a release state, in which the platform 3 can move from the transport position into the passive position. The first locking mechanism 55 comprises an electric actuator 57 and is covered by a plate 59. The electric actuator 57, when actuated, pulls a wire 61 which is connected to a locking means 63 for switching between the locked state and the release state. The first locking mechanism 53 further comprises an emergency lever 95 for pulling the wire 61 independently from the electric actuator 57.

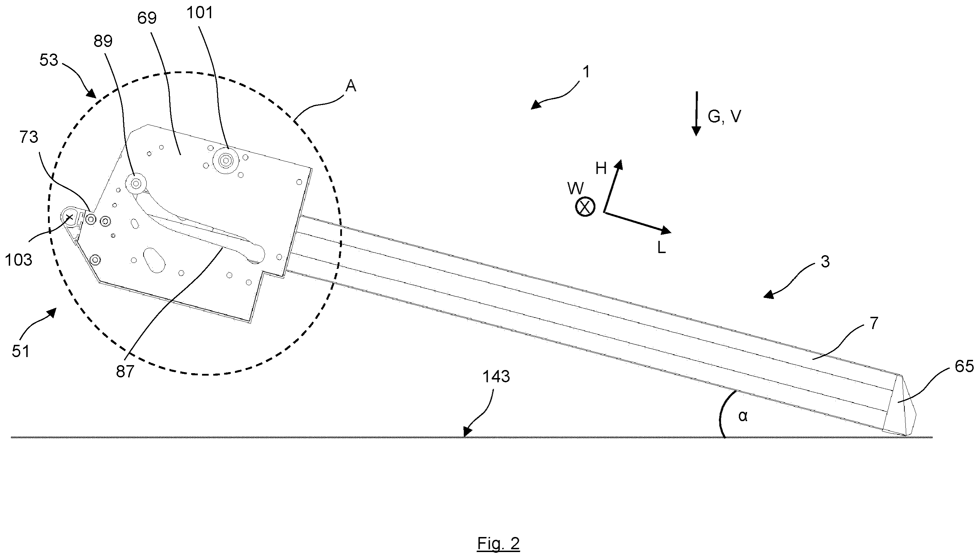

Fig. 2 shows a side view on the foldable of Fig. 1, wherein the platform 3 is in entry position. The platform 3 of the foldable ramp 1 extends in longitudinal direction L and in width direction W, wherein the platform side walls 7 protrude in height direction H from the platform floor 5 (not shown in Fig. 2). In longitudinal direction L on the side facing away from the passenger car, in particular the bridge 53, a cover 65 is provided on each platform side wall 7. The covers 65 can be made of plastic. Figure 2 further shows a bridge side plate 69 and a part of an extrusion profile 73 of the bridge 51. The bridge 51 is rotatable around a rotation axis 103 for transferring the platform 3 from the transport position into the entry position and vice versa. Fig. 2 furthers shows parts of the pivot mechanism 53 for transferring the platform 3 from the passive position into the entry position and vice versa, namely a pin 89 and a groove 87 forming together a pin-groove arrangement, and a rotational bearing 101 of a slide 83 of a slide-rial arrangement.

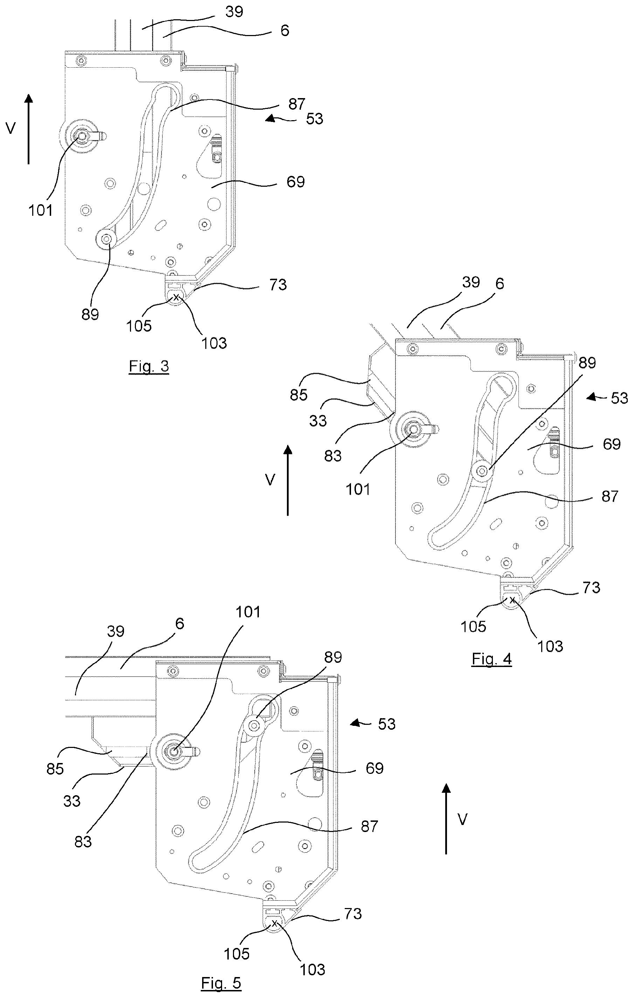

Fig. 3 to 5 show side views on section A of the foldable ramp shown in Fig. 2 to illustrate the functioning of the pivot mechanism 53 of the foldable ramp 1. In particular, Fig. 3 shows the platform 3 in transport position, Fig. 4 shows the platform 3 in an intermediate position between transport position and passive position and Fig. 5 shows the platform 3 in passive position. As can be seen, when the platform moves from the transport position to the passive position, the pin 89 of the pin groove arrangement moves along the curved groove 87. As the curved groove 87 extends in vertical direction and is implemented in the bridge side plate 69 which does not move between the transport and the passive position, the pin 89 moves in vertical direction V too. As the pin 89 is connected to the bridge side wall 7, the bridge side wall 7 moves in vertical direction V too. In other words, between the passive position and the transport position, the platform 3 conducts not only a rotational movement but also a translational movement allowing, e.g. in total a rotational translational movement. Thanks to the movement in vertical direction V, the platform 3 can be lowered when moving from the passive position to the transport position so that the ramp 3 comes closer to the ground 143 (see Fig. 2) from which a wheelchair accesses the ramp 3 in entry position. This allows the ramp to be arranged in a less steep angle α (see Fig. 2) to the ground 143 making it easier for a wheelchair to access the ramp 3. As can further be seen by the comparison of Fig. 3 to 5, when the platform 3 moves from the transport position to the passive position, a slide 83 (wee Figs.4, 5 and 13) of the slide-rail arrangement moves translationally inside the rail 33 thus allowing a further translational movement component of the platform 3. As can be seen in Fig. 3 to 5, the slide 83 is rotatably connected to the bridge side plate 69 by a rotational bearing 101. For moving from the transport position (Fig. 3) into the entry position, the bridge 51 is rotatably mounted around a rotation axis 103 which is defined by a rotation shaft channel 105, which has in the present example a D-shaped cross section, for receiving a rotation shaft (not shown in Fig. 2 to 5).

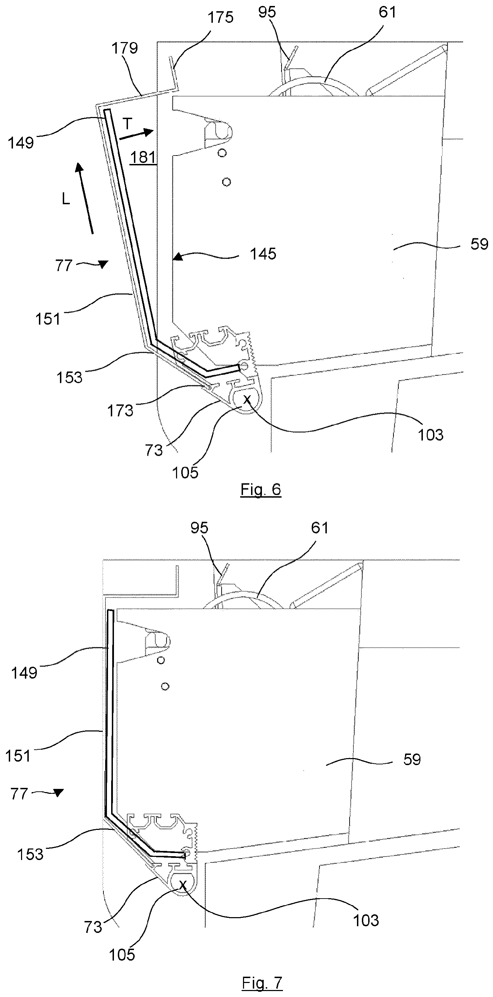

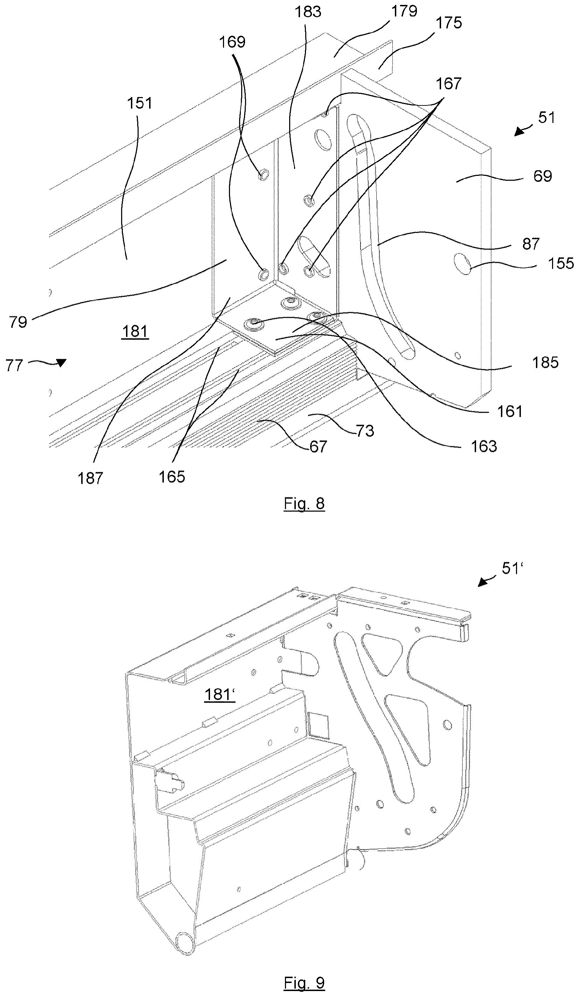

Fig. 6 shows a side view along line B-B shown in Fig. 1 with the foldable ramp 1 in an intermediate position between the transport position and the entry position, wherein the platform3, the bridge side plate 69 and the reinforcing part 79 (see Fig. 8) of the foldable ramp 1 are faded out. In Fig. 7, the foldable ramp is shown in transport position 1. In Fig. 6 and 7, two parts of the bridge 51 are shown, namely the extrusion profile 73 and a bridge rear plate 77. Further, the plate 59 can be seen, which covers the electric actuator 57 of the first locking mechanism 55 (see Fig. 1). The plate 59 forms a sealing edge 145 with a sealing profile 149 of the bridge rear plate 77, of the foldable ramp. The covering plate 59 serves as a protective barrier, shielding the electric actuator and the locking means from external elements such as dust, moisture, and debris, which could otherwise impair their functionality. By forming a sealing edge with the sealing profile of the bridge rear plate 77, the plate further ensures that the components in the bridge and in the interieur of the passenger car are protected from external elements, such as dust, when the platform is in transport or passive position. As can be seen, the sealing profile 149 is located in a cavity 147 of the bridge 51, in particular partially on the bottom 151 of the bridge rear plate 77, the extrusion profile 73 and a first connecting part 153 (between the bridge rear plate bottom and the extrusion profile) of the bridge rear plate 77. The bridge rear plate 77 is preferably made of metal, in particular aluminium. As can be seen, the bridge rear plate 77 is preferably formed from a sheet material, in particular an aluminium sheet material.

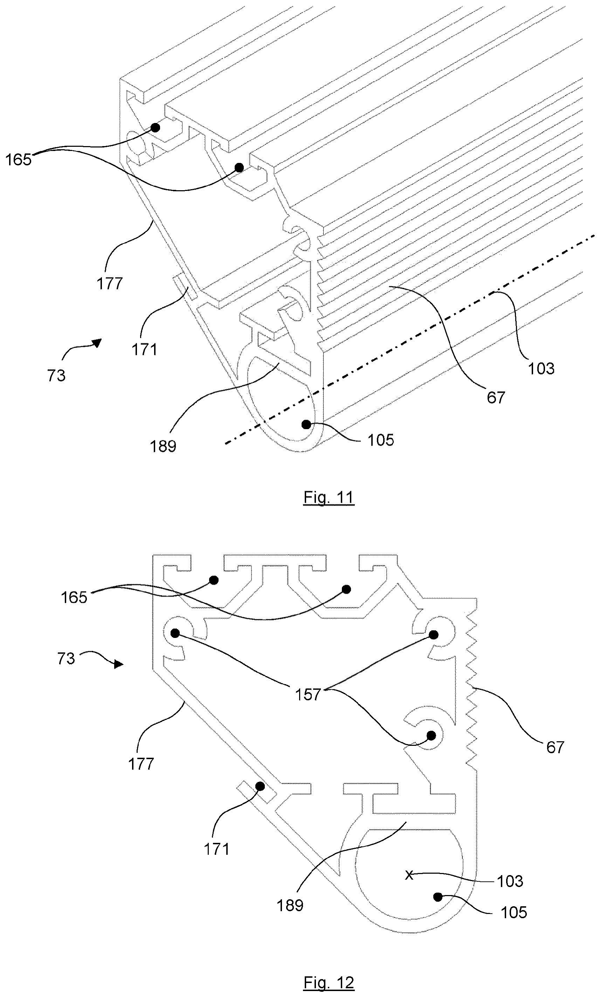

The extrusion profile 73 comprises a notch 171 (see Fig. 12) receiving an edge 173 of the bridge rear plate 77. The bridge rear plate 77 may comprise a support shoulder 175 for supporting the platform (not shown in Fig. 5) in at least one of the transport position, the entry positions and positions in between the transport position and the entry position. The support shoulder 175 extends along 100% of the extension of the extrusion profile. The bridge rear plate further comprises a bottom 151 being offset from the support shoulder 175. The bottom 151 extends along about 100% of the extension of the extrusion profile. The bridge rear plate 77 further comprise a first connection part 153 connecting the bottom 151 with the extrusion profile 73 by a notch 171 (see Fig. 12) of the extrusion profile 73. The first connection part extends inclined to the bottom and parallel to a support shoulder 177 (for supporting the first connection part 153 on the extrusion profile 73) of the extrusion profile 73. Additionally, the bridge rear plate 77 comprises a second connection part 179 connecting the bottom 151 with the support shoulder 175 of the bridge rear plate 77. The second connection part 179 extends substantially orthogonal to the bottom 151. The first and second connection part extend along about 100% of the extension of the extrusion profile 73 parallel to the width direction W / extrusion direction E.

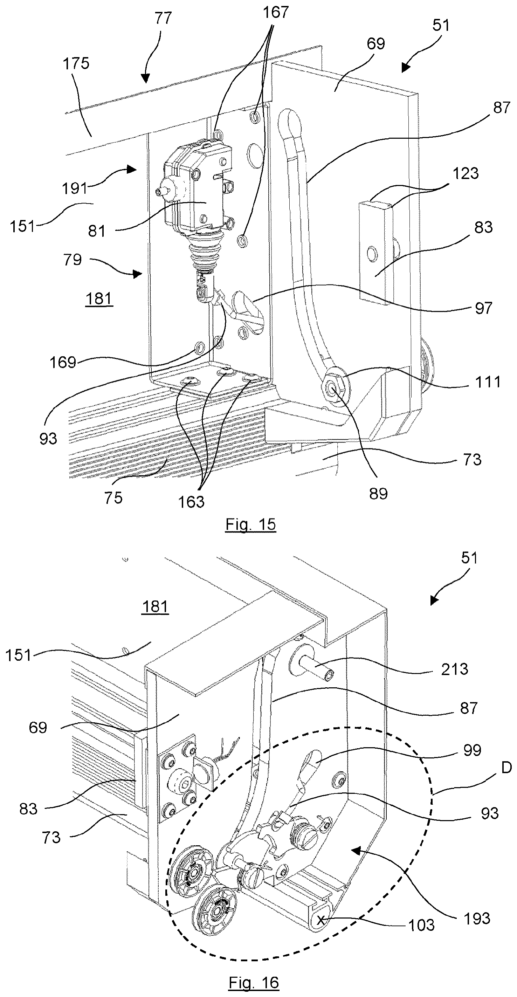

As can be seen, the bridge 51 delimits a cavity 181. In transport position, the cavity 181 is covered by the platform (not shown in Fig. 8). The cavity 181 is delimited in a thickness direction T (see Fig. 6) by the platform bottom 151 of the bridge rear plate 77. **In** longitudinal direction L the cavity 181 is delimited at one side by the extrusion profile 73 and at the opposite side by the second connecting part 179 of the bridge rear plate 77 and in a width direction from both sides by the bridge side plates 69. As can be seen in Fig. 15, the cavity 181 houses an actuator 81 of the first locking mechanism 55 (see Fig. 15) and the reinforcing part 79. Thanks to the dimension of the cavity 181, the bridge can advantageously be used for housing functional parts, such as the reinforcing part 79 and the actuator 81 of the first locking mechanism 55. As can be further seen, the previously described wire 61 and emergency lever 95 of the first locking mechanism 55 shown in Fig 1 protrudes (in gravitational direction G upwards) beyond the covering plate 59 thereby providing access to the wire 61 and the emergency lever 95 even when the platform (not Shon in Fig, 6 and 7) is in transport position.

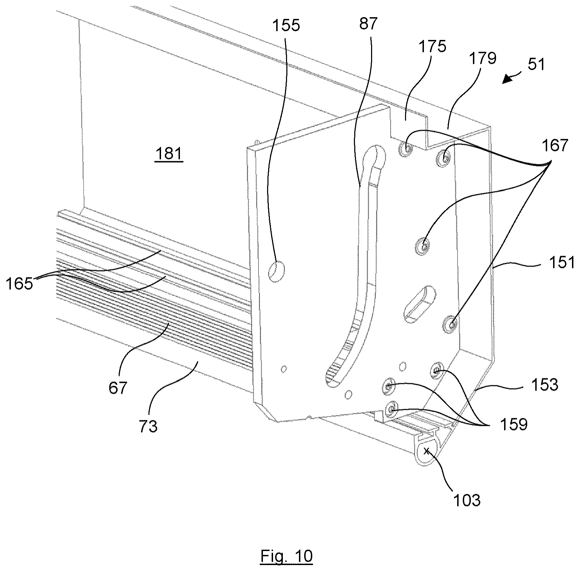

Fig. 8 shows a perspective view on the inside of a bridge 51 of a foldable ramp 1 according to the first and second aspect of the present invention. The bridge comprises an extrusion profile 73, a bridge rear plate 77, a bridge side plate 69 and a reinforcing part 79. The bridge side plate 69 carries a curved groove 87 of the pin-groove arrangement and a mounting hole 155 for the rotational bearing of the previously described slide 83 of the rail-slide arrangement. Thanks to the use of an extrusion profile 73 according to the first aspect of the invention, a complex shape produced in one step, namely by extrusion, can be provided which allows the incorporation of multiple functions. **In** the present example, the extrusion profile 73 provides for example multiple functions in terms of providing multiple connecting means for connecting the bridge side plate 69, the bridge rear plate 77 and the reinforcing part 79 thereto. For example, the connection between bridge side plate 69 and extrusion profile 73 is realized partially by connecting the bridge side plate 69 directly to the extrusion profile 73 via screw holes 157 (see Fig 12), integrated in the extrusion profile 73 and partially indirectly via the reinforcing part 79, presently in the form of a steel inlay 79. The direct connection is realized by screw 159 (see Fig. 10). Further to that, the indirect connection via the reinforcing part 79 is realised by screws 163 engaging with nuts (not shown) in slots 165 being integrated in the extrusion profile 73 for connecting the reinforcing part with the extrusion profile 73 and by screws 167 (see Fig. 10) connecting the bridge side plate 69 with the reinforcing part 79. The reinforcing part 79 is further connected by screws 169 to the bridge rear plate 77.

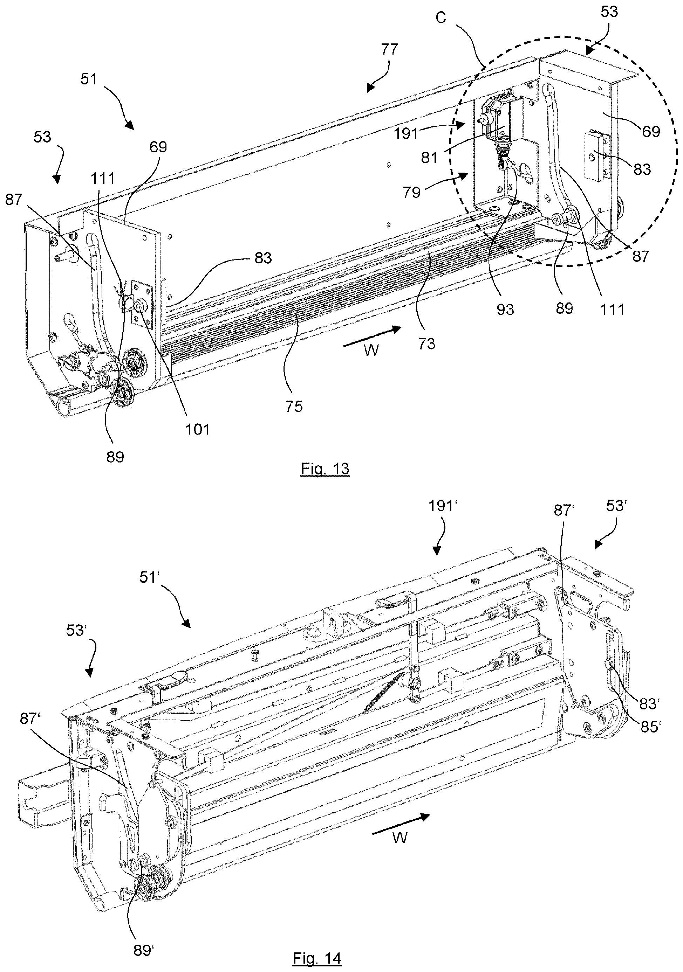

For making the mounting of the bridge side plates 69 easier, the extrusion profile comprises one notch 161 on each side of the extrusion profile 51 in width direction W for prepositioning the bridge side plates 69 prior to connecting them to the bridge 51. **In** summary, thanks to the use of an extrusion profile 75 and/or the reinforcing part, the connection of the bridge side plate 69 can be improved which allows to produce the bridge side plate 69 from plastic, in particular of Polyamide, more in particular of PA6, thereby reducing friction between the curved groove 87 incorporated therein and the pin 89. This allows to produce the bridge 51 with less parts (in particular compared to the example shown in Fig. 14).

In particular the use of the reinforcing part 79, preferably a steel inlay as shown in Fig. 8, allows to securely connect a bridge side plate 169 made from Polyamide to an extrusion profile made from aluminium in accordance with the second aspect of the invention. The reinforcing part 79 has a rectangular shape. The reinforcing part 79 comprises one connecting wall 183 facing the plastic side plate and one connecting wall 185 facing the extrusion profile. Additionally, the reinforcing 79 comprises one connecting wall 187 facing, the bridge rear plate 77, in particular the bottom 161 of the bridge rear plate 77.

Fig. 9 shows a perspective view on the inside of a bridge 51' of a foldable ramp being made completely from aluminium sheet material and thus being not according to the first and second aspect of the present invention. Due to the exclusive use of sheet material, the bridge 51' requires more mounting space for providing enough structural integrity, thereby leaving less space for the cavity 181' so that actuators cannot be properly housed in the cavity 181'. Further, due to not using an extrusion profile and a reinforcing part, the bridge cannot incorporate as many functions as the bridge 51 shown in Fig. 8 so that additional components are required, for example for realizing the pivot mechanism (see Fig 14).

Fig. 10 shows perspective view on the outside of a bridge 51 of a foldable ramp 1 according to the first and second aspect of the present invention in which the previously described screws 159 and 167 can be seen.

Fig. 11 shows a perspective side view on the extrusion profile 73 of the bridge 51 of a foldable ramp 1 according to the first aspect of the invention as described in detail above, while Fig. 12 shows a side view on the extrusion profile 73. As can be seen, the rotation shaft channel 105 for the shaft (not shown) being rotatable around the rotation axis 103 has a D-shaped cross section 189.

Fig. 13 shows a perspective view on a bridge 51 of the foldable ramp 1 shown in Fig. 1 comprising parts for a pivot mechanism 53 on each side of the foldable ramp 1 in width direction W. Each pivot mechanism 53 comprises a slide 83 forming together with the previously mentioned rail 33 a slide-rail arrangement of the respective pivot mechanism 53. As can be seen, the slide 83 is rotatable connected to a bridge side plate 69 by a rotational bearing 101. Each slide 83 comprises a T-shaped cross section being adapted to a T-shaped cross section of a slide channel 85 (see Fig. 1) in the rail thereby providing a slide-rail arrangement with defined clearance between the slide 83 and the rail 33 in width direction W. Further, each pivot mechanism 53 comprises a pin-groove arrangement with a curved groove 87 being integrated into each bridge side plate 69 and a pin 89 being guided in the curved groove 87. Thanks to a bushing 111 being arranged between the pin 89 and the groove 87, the pin-groove arrangement has a defined clearance in width direction W. As can be seen, the bridge 51 comprises an extrusion profile 73 (first aspect of the invention), a reinforcing part 79 (second aspect of the invention) and an electric actuator 81 of a second locking mechanism 191 (third aspect of the invention).

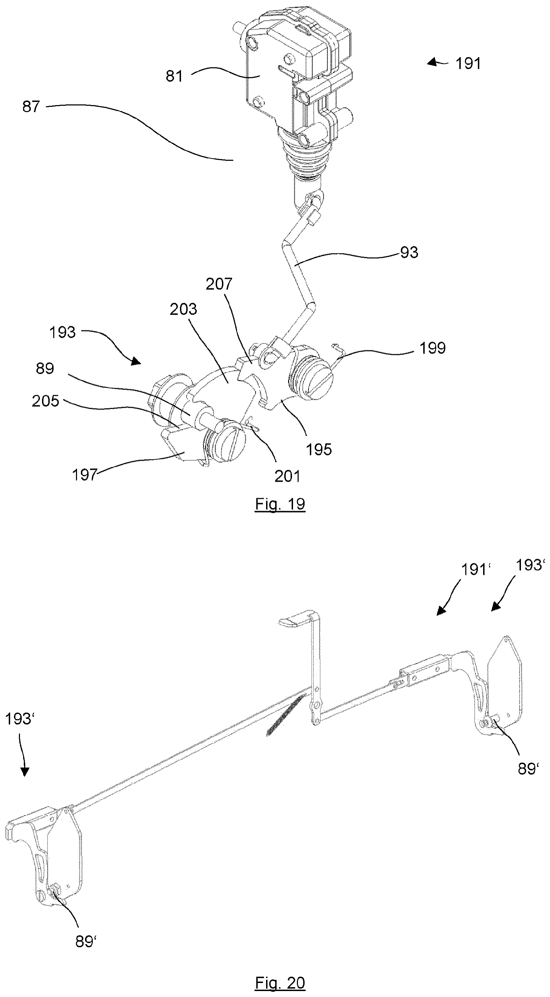

Fig. 14 shows a perspective view on a bridge 51' of a foldable ramp not according to any of the first to the third aspect of the present invention. Contrary to Fig. 13, the foldable ramp 1' in Fig. 14 makes use of a pin 83' guided in a groove 33' without defined clearance in width direction W. In particular the pin 83' and the groove 33' do not comprise any structures avoiding or restricting relative movement between the pin 83' and the groove 33' in width direction W so that the pin-groove arrangement as such does not provide a defined clearance between pin 83' and groove 33'. The foldable ramp 1 in Fig. 14 comprises a further pin-groove arrangement with a pin 89' and a curved groove 87 which however also lack structures avoiding or restricting relative movement between the pin 89' and the curved groove 87 in width direction W so that the pin-groove arrangement as such does not provide a defined clearance between pin 89' and the curved groove 87.The bridge 51' does not comprise an extrusion profile (thus being not according to the first aspect of the invention) and no reinforcing part 79 (thus being not according to the second aspect of the invention). Fig. 14 shows a second locking mechanism 191 being shown individually in Fig. 20 which does not make use of an electric actuator (thus being not according to the third aspect of the invention).

Fig. 15 shows a perspective view on the inside of section C of the bridge 51 of the foldable ramp 1 shown in Fig. 13 according to the third aspect of the present invention, wherein the platform 3 is faded out to show the inside of the bridge 51. The bridge 51 comprises an extrusion profile 73 with corrugated surface 75, a bridge side plate 69, a bridge rear plate 77, a reinforcing part 79 in form of a steel inlay 79 and an actuator 81 of the second locking mechanism. As previously mentioned, the pivot mechanism comprises a slide-rail arrangement, wherein the rail can be seen for instance in Fig. 1 while the slide 83 can be seen in Fig. 15. The slide 83 has a T-shaped cross section corresponding to a T-shaped cross section of a slide channel 85 in the rail 33 (see Fig. 1) to provide a defined clearance between slide 83 and rail 33 in width direction W. In detail, the rail 33, in particular the slide channel 85, delimits in thickness direction T from both sides at least one, preferably two, slide guiding section, wherein the slide comprises at least one, preferably two, slide section 123 (see Fig. 15) protruding into the at least one slide guiding section, wherein the difference in thickness of the slide guiding section and the slide section 121 defines the clearance between the slide 83 and the rail 33. The bridge side plate 69 further comprises a curved groove 87 in which a pin 89 is arranged translationally movable to provide - in addition to the slide-rail arrangement - a pin-groove arrangement of the pivot mechanism 53. The pin 89 is connected to the rail 33, in particular by a mounting hole 91 (see Fig. 7) of the rail 33. Further, the actuator 81 is connected to a wire 93 for actuating locking means of the second locking mechanism 191. For allowing to mount the second locking means on the opposite side of the bridge side plate 69, the wire extends through an elongated hole 97 of the reinforcing part 79 and through an elongated hole 99 (see Fig. 16) of the bridge side plate 69.

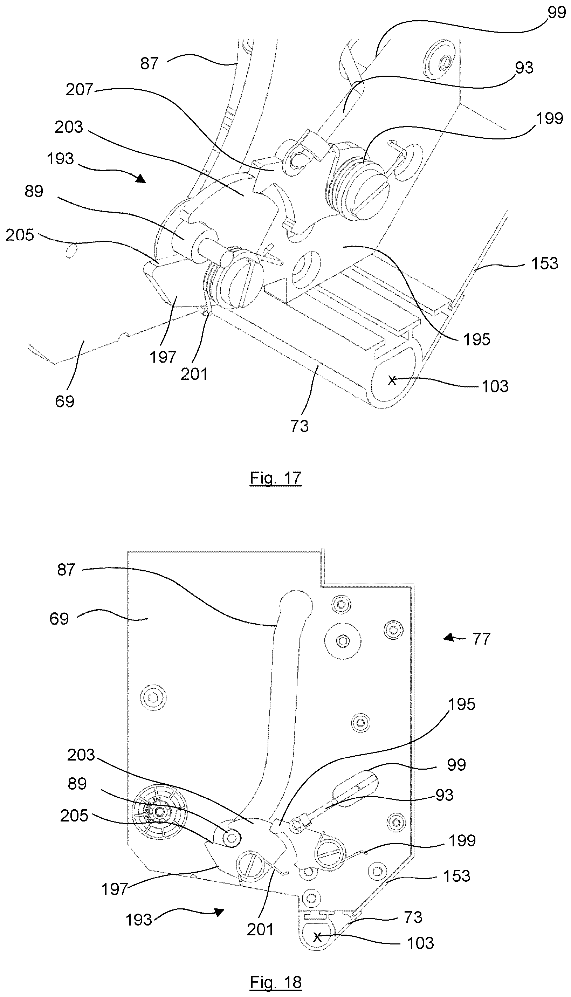

Fig. 16 shows a perspective view on the outside of section C of the bridge 51 of the foldable ramp shown in Fig. 13 according to the third aspect of the present invention, wherein the platform 3 is faded out, As can be seen, the wire 93 is connected with locking means 193 of the second locking mechanism so that, when the electric actuator is actuated, the wire pulls the locking means 193. The locking means are described in detail with respect to Fig. 17 to 19 showing, in Fig. 17 an enlarged perspective view on section D of Fig. 16, in Fig. 18 a side view on the outside of section C of the bridge 51 of the foldable ramp 1 shown in Fig. 13, and in Fig. 19 a perspective view on the locking means 193 of the second locking mechanism 191 shown in Figs. 15 and 16. The locking means 193 comprise a latch 195 and a latch lock 197. The latch 195 and the latch lock 197 are pivotably mounted to the bridge side plate. The latch lock 197 comprises a mouth 205. In a locked state of the second locking mechanism 193, the mouth directly engages with the pin 89 of the pin-groove arrangement of the pivot mechanism 53 in that a movement of the pin 89 along the groove 87 - and thus a movement of the platform from the transport position into the passive position - is blocked. For this purpose, the latch comprises a protrusion 207 engaging with a stopper 203 of the latch lock, in that the latch lock is locked in the locking position.

To avoid unintended release of the latch lock 197 a torsion spring 199 is used which urges the protrusion 207 of the latch 195 against the stopper 203 of the latch lock 197. When the actuator 81 is actuated to switch into the release state, in which the platform can move from the transport position into the passive position, the wire 93 pulls the latch 195 against the force of the torsion spring so that the latch 195 pivots away from the latch lock, thereby allowing the latch lock 197 to also pivot out of the locking position. To ensure that the latch lock 197 automatically moves into the release position, a torsion spring 201 is used urging the latch lock 197 into the release position in which the torsion spring 201 pulls the latch lock in that the pin 89 can leave the mouth 205 and move along the curved groove 87 so that the platform can transfer from the transport position into the passive position.

As can be seen in Fig. 13, the foldable ramp 1 preferably makes use of two locking mechanism 193 with a locked state, in which a movement of the platform from the transport position into the passive position is blocked, and a release state, in which the platform can move from the transport position into the passive position, wherein the two locking mechanism 193 can be actuated independently from each other.

Contrary thereto, the locking mechanism 192' shown in Fig. 20 makes use of two locking means 193' which can be actuated only manually and which are coupled with each other so that they cannot be actuated separately. Further, the locking mechanism 192' of Fig. 20 lacks the integration of springs and a direct engagement of the locking means with the pin 89' of the pin-groove arrangement which makes the system prone to failure.

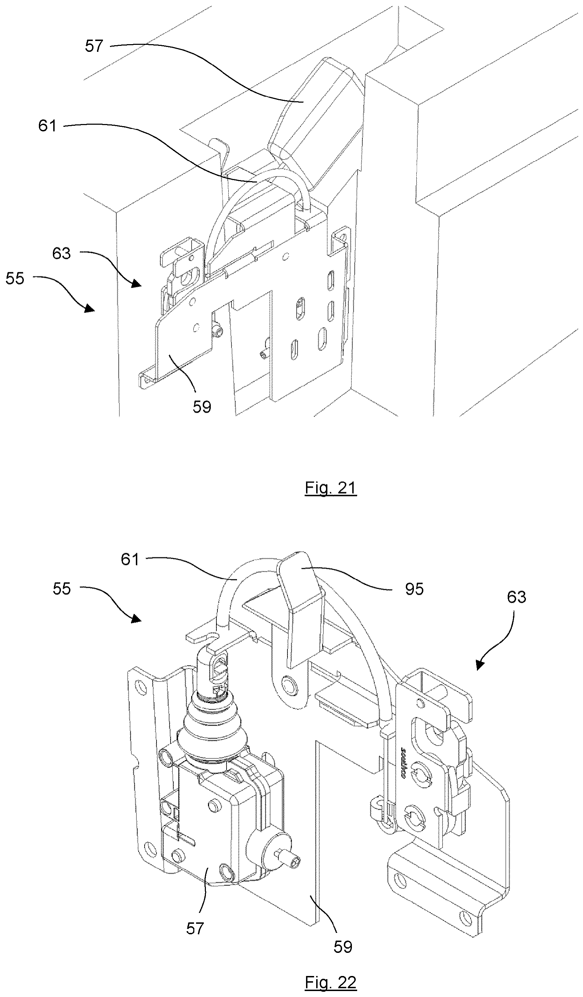

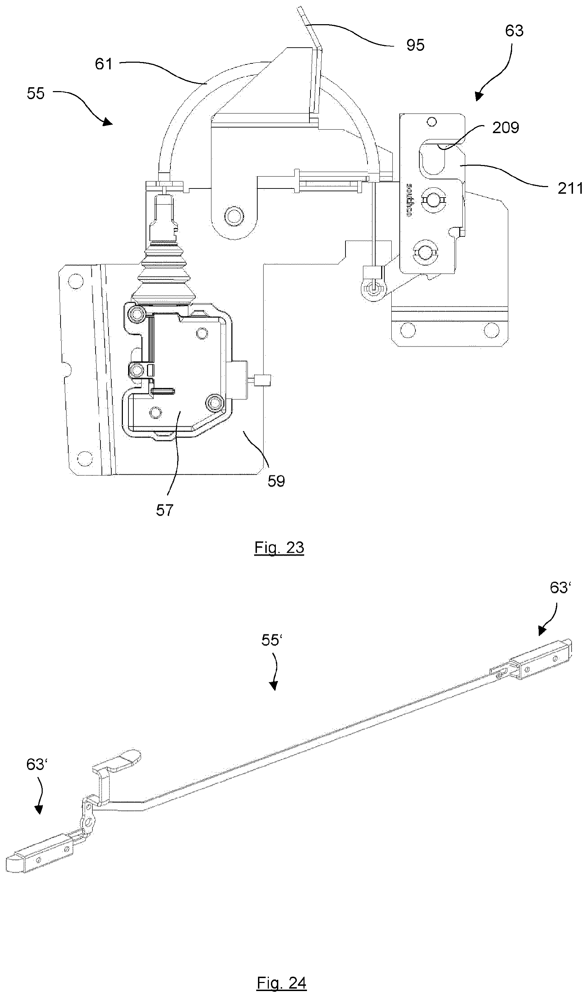

The foldable ramp 1 further comprises two first locking mechanisms 55 with a locked state, in which a movement of the platform 3 from the transport position into the entry position is blocked, and a release state, in which the platform 3 can move from the transport position into the entry position. The two first locking mechanism are designed to be able to switch independently form each other from the locked state into the release state and vice versa. The two first locking mechanisms 55 are connected to the passenger car and are described in detail with reference to Fig. 21 to 23 showing in Fig. 21 an enlarged perspective view on one of the two the first locking mechanisms 55 shown in section E of Fig. 1, in Fig. 22 a perspective view on the inside of the first locking mechanism 55 shown in Fig. 21 and in Fig. 23 a side view on the inside of the first locking mechanism 55 shown in Fig. 21.

The first locking mechanism 55 has a locked state, in which a movement of the platform 3 from the transport position into the entry position is blocked, and a release state, in which the platform 3 can move from the transport position into the entry position. The first locking mechanism 55 comprises an electric actuator 57 for switching from the locked state into the passive state and vice versa. The first locking mechanism 55 further comprises locking means 63 and a wire 61 that, when the electric actuator57 is actuated, pulls the locking means 63 to cause the locking mechanism to switch from the locked state into the release state. The first locking mechanism further comprises an emergency lever 95 for switching independently from the electric actuator 57 from the active state into the passive state and vice versa, wherein the electric actuator 57 and the emergency lever 95 pull, when actuated, the wire 61 thereby causing the locking mechanism 55 to switch from the locking state into the release state and vice versa.

The electric actuator 57 and the locking means 63 are fixedly connected to the passenger car, wherein the platform 3 is located in between two electric actuators 57 and two locking means 63 of the two first locking mechanisms being fixedly connected to the passenger car. The electric actuators 57and the locking means 63 are covered by a plate 59 forming the sealing edge 145 with the sealing profile 149 of the bridge 51, in particular of the bridge rear plate 77, as described above with respect to Fig. 6 and 7. The locking means 63 is realized as a latch lock with a mouth 209 and a hook 211. In locked state, a pin 213 being fixedly connected to the bride side plate 69 is locked between the mouth 209 and the hook 211 of the latch look. The hook is pivotably mounted and connected to the wire 61 so that, upon actuation by the electric actuator, the wire 61 pulls the hook 211 thereby allowing the pin 213 to leave the mouth 209 so that the bridge can move from the transport position into the entry position.

Contrary thereto, the locking mechanism 55' shown in Fig. 24 makes use of two locking means 63' which can be actuated only manually, and which are coupled with each other so that they cannot be actuated separately. Further, the locking mechanism 192' of Fig. 20 lacks the integration of springs which makes the system prone to failure.

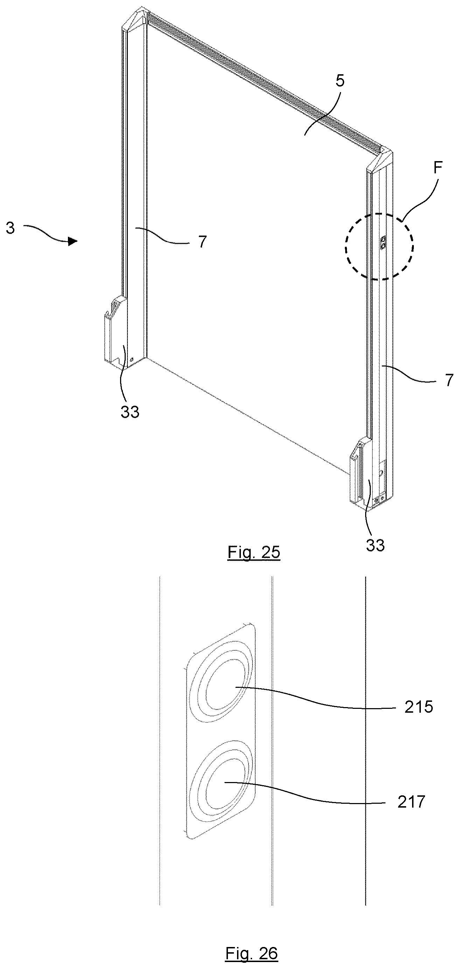

Fig. 25 shows a perspective view on a platform 3 a foldable ramp 1 according to the third aspect of the invention. Fig. 26 shows an enlarged view on section F of Fig. 25. As can be seen therein, the foldable ramp comprises a first button 215 and a second button 217, wherein the first button 215 may be designed for actuating the first locking mechanism 57 while the second button 217 may be designed for actuating the second locking mechanism 191. The foldable ramp 1 may comprise a keyboard, in particular a membrane keyboard, in particular at the upper end of the platform 3, in particular of the platform side wall 7. The keyboard, in particular membrane keyboard, may comprise the first and/or the second button.

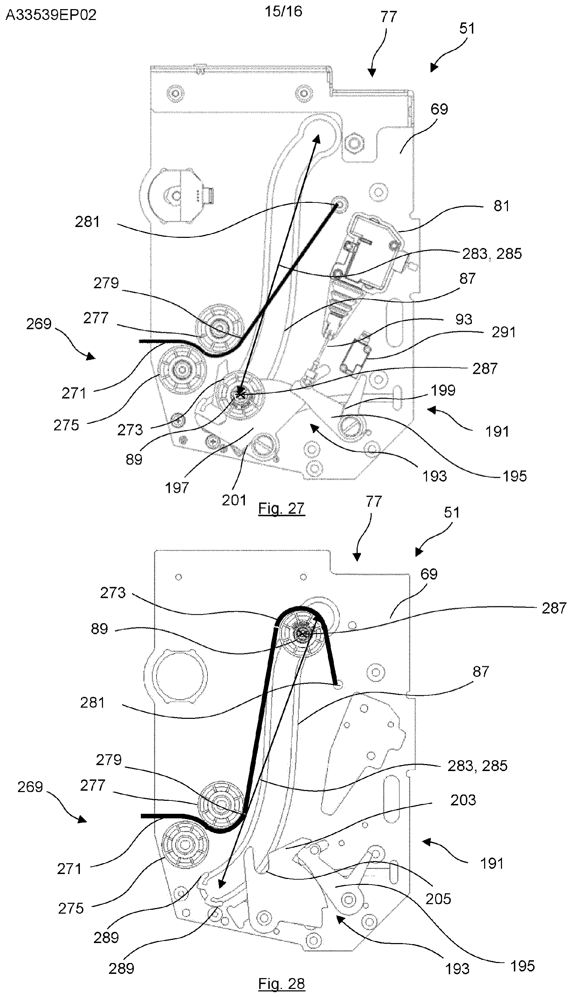

Fig. 27 shows a side view on an alternative locking mechanism 191, in particular second locking mechanism 191, to the one shown in Figs. 15 to 19 when the ramp is in transport position. Fig. 28 shows a side view on an alternative locking mechanism 191 to the one shown in Figs. 15 to 19 when the ramp is in passive position. The functioning of the locking mechanism 191 is substantially the same as previously described. Same or similar features are denotated with the same reference signs. To avoid repetition, the following description focuses on the differences / additional features shown in Figs. 27 and 28.

As can be seen in Figs. 27 and 28, the electric actuator 81 is connected to the bridge side plate 69, in particular on the same side of the bridge side plate 69 carrying locking means 193 of the locking mechanism 191 and on the side of the bridge side plate 69 facing away from the inside of the bridge 51 and the passenger car. The electric actuator 81, when actuated, pulls locking means 193 in the form of a latch lock 195 via the wire 93. This may allow for a compact design, in particular if the bridge side plate 69 is offset towards the inside of the bridge 51 (as shown in Fig. 17), in particular to an extent allowing positioning the electric actuator 81 in the space provided by the offset of the bridge side plate 69. In such implementation with offset of the bridge side plate 69, the electric actuator 81 can be seen as being located inside the bridge 51, even though not being located between two bridge side plates 69 but rather on their outside, thereby also profiting from the previously described benefits of locating the electric actuator 81 inside the bridge 51. Further to that, this implementation bears the advantage of providing a straight extension of a wire 93 connecting the locking means 193 with the electric actuator 81 thereby providing a less complex design and a direct force transmission between the electric actuator 81 and the locking means 193. In Fig. 27, the wire 93. between the electric actuator 81 and the locking means 193 extends straight. This is in the present case achieved by locating the electric actuator 81 in that the wire 93, the electric actuator 81 and the locking means 193 are located on the same side of a bridge side plate 69, in particular in that the wire 93 extends in an angle between 0° and 45°, in particular between 10° and 30°, relative to a vertical.

The locking mechanism 191 comprises a locking means sensor 291, in particular a latch lock sensor. The locking means sensor 291 may be designed to detect the state of the locking mechanism 191, in particular to detect whether the locking mechanism 191 is in locked state or in passive state.

Further to the second locking mechanism 191, Fig. 27 shows a side view on a pivot mechanism 53 according when the platform 3 (not shown) is in transport position while Fig. 28 shows a side view on the pivot mechanism 53 when the ramp 3 (not shown) is in passive position. The functioning of the pivot mechanism 53 is substantially the same as previously described. Same or similar features are denotated with the same reference signs. To avoid repetition, the following description focuses on the differences / additional features shown in Figs 27 and 28.

Figs. 27 and 28 show a biasing mechanism 269 configured to act against a gravitation force of the platform when the platform moves between the passive position and a predefined angle, wherein the guiding means of the pivot-mechanism are configured to decouple the biasing mechanism 269 from the platform 3 (not shown) when the platform moves between a predefined angle, presently about 70°, and the transport position. The biasing mechanism 269 comprises an actuator (not shown) for providing a force acting against the gravitational force of the platform and a force transmitter, presently realized as rope 271, for coupling the actuator with the platform 3. The actuator preferably comprises at least one, preferably at least two, spring/s preferably located below the platform, preferably below the platform in in passive position. The rope 271 is connected with one end to the actuator (not shown) and with the other end to the pivot mechanism 53, in the present case to the bridge side plate 69. The guiding means comprise a pin-groove arrangement with a pin 89 being connected with the platform 3 (not shown) and moving within a groove 87 when the platform moves between the transport position and the passive position, wherein the rope 271 crosses the path of the groove 87 in that the pin 89 couples the biasing mechanism 269 with the platform by engaging with the rope 271 when the platform moves between the passive position and the predefined angle, and decouples the biasing mechanism 269 from the platform by disengaging the rope 271 when the platform moves between the predefined angle and the transport position. A pulley 273 is connected to the pin 89 which engages with the rope 271. Two further pulleys 275, 277 are connected to the bridge side plate 69 carrying the groove 87 of the pin-groove arrangement. The two pulleys are located on the bridge side plate 69 in that the rope 271 is deflected from a start position 279 near the position of the pin 89 when the platform is in transport position towards a connecting position 281 being close to the position where the pin rests when the platform is in passive position. The rope 271 crosses the path of the groove 87 between the start position 279 and the connecting position 281. The relative term "near" is in this context in particular to be understood in that the start position and the connecting position are spaced less than 50%, 40%, 30% or 20% of the length 283 of a straight line 285 extending between the positions of an axis 287 of the pin 89 when the platform is in transport position and in passive position. The start position 279 and the connecting position 281 are located on opposite sides of the groove 87. The rope 271 extends straight between the start position 279 and the connecting position 281. By connecting the rope 271 to the bridge side plate 69, it can be realized that the biasing mechanism 269 additionally acts against the gravitational force of the platform when the platform moves from the transport position into the entry position and vice versa, e.g. in that the bridge side wall plate 69 pulls the rope 271 when moving from the transport position to the entry position.

As can be seen by the comparison of Figs. 27 and 28, when the platform moves from the predefined angle towards the passive position, the pin 89 pulls the rope 271 thereby tensioning the spring (not shown) causing a spring force acting against the gravitational force of the ramp, wherein, in the passive position, the spring is pretensioned so that, when the platform moves from the passive position towards the predefined angle, the spring force acts against the gravitational force of the ramp.

The end of the groove 87 where the pin 89 rests when the platform is in transport position or any position between the transport position and the entry position comprises clamping means in the form of two lips 289, causing a clamping force on the pin 89 counteracting movement of the pin 89 within the groove 87 when the pin 89 is in transport position, entry position or any position between the transport position and the entry position. The two lips 289 overlap with the guiding pin 89 when the platform is in transport position, entry position or any position between the transport position and the entry position.

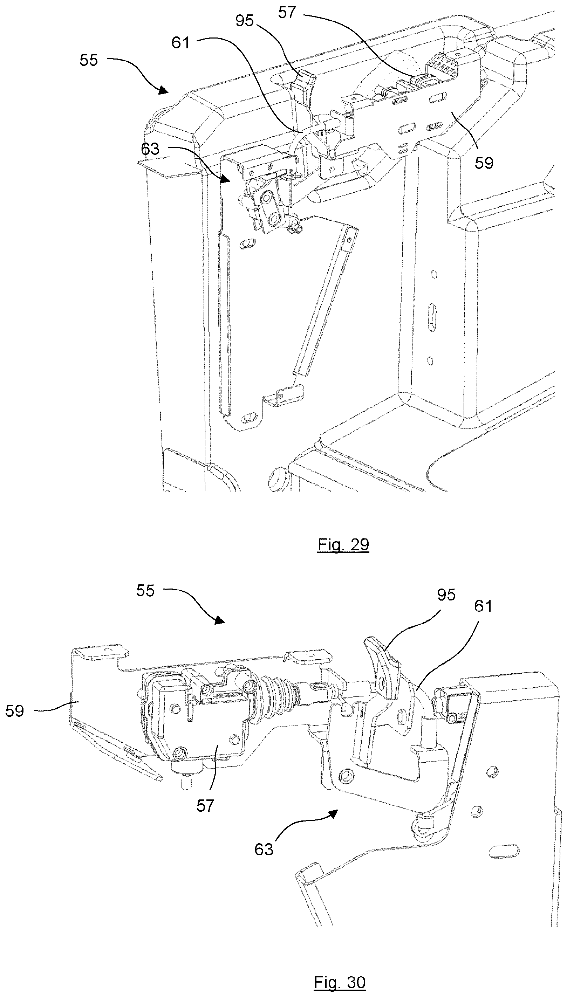

Fig. 29 shows a perspective view from the outside on an alternative locking mechanism 55, in particular first locking mechanism 55, to the one shown in Figs. 21 to 23. Fig. 30 shows a perspective view from the inside on the alternative locking mechanism 55. The functioning of the locking mechanism 55 is substantially the same as previously described. Same or similar features are denotated with the same reference signs. To avoid repetition, the following description focuses on the differences / additional features shown in Figs. 29 and 30. The electric actuator 57 and the locking means 63 are located to each other in that, between the locking means 63 and the electric actuator 57 the wire 61 extends with a curvature of 90°. By limiting the curvature of the wire, the design can be made less complex and the force transmission can be made more direct. This curvature of 90° is achieved in the present case by locating the electric actuator 57 in that the wire enters in a horizontal extension into the electric actuator 57 while the locking means 63 are located in that the wire 61 enters in a vertical extension into the locking means 63.

The features disclosed in the above description, the figures and the claims may be significant for the realization of the invention in its different embodiments individually as in any combination.

### List of Reference Signs:

- 1: Foldable ramp
- 3: Platform
- 5: Platform floor
- 7: Platform side wall
- 33: Rail
- 49: Floor of passenger car
- 51: Bridge
- 53: Pivot mechanism
- 55: First locking mechanism
- 57: Electric actuator
- 59: Plate
- 61: Wire
- 63: Locking means
- 65: Cover
- 69: Bridge side plate
- 73: Extrusion profile
- 75: Corrugated surface
- 77: Bridge rear plate
- 79: Reinforcing part / steel inlay
- 81: Actuator
- 83: Slide
- 85: Slide channel
- 87: Curved groove
- 89: Pin of pin-groove arrangement
- 91: Mounting hole
- 93: Wire
- 95: Emergency lever
- 97: Elongated hole
- 99: Elongated hole
- 101: Rotational bearing
- 103: Rotation axis
- 105: Rotation shaft channel
- 111: Bushing
- 121: Slide guiding section
- 123: Slide section
- 135: Side plates
- 143: Ground
- 145: Sealing edge
- 147: Cavity of the bridge
- 149: Sealing profile
- 151: Bottom of bridge rear plate
- 153: First connecting part
- 155: Mounting hole
- 157: Screw hole
- 159: Screws
- 161: Notch
- 163: Screws
- 165: Notch
- 167: Screws
- 169: Screws
- 171: Notch
- 173: Edge of bridge rear plate
- 175: Support shoulder of bridge rear plate
- 177: Support shoulder of extrusion profile
- 179: Second connecting part
- 181: Cavity delimited by the bridge 51
- 183: Connecting wall
- 185: Connecting wall
- 187: Connecting wall
- 189: D-shaped cross section
- 191: Second locking mechanism
- 193: Locking means
- 195: Latch
- 197: Latch lock
- 199: Torsion spring
- 201: Torsion spring
- 203: Stopper
- 205: Mouth
- 207: Protrusion
- 209: Mouth
- 211: Hook
- 213: Pin
- 269: biasing mechanism
- 271: rope
- 273: pulley
- 275: pulley
- 277: pulley
- 279: start position
- 281: connecting position
- 283: length
- 285: straight line
- 287: axis of the pin
- 289: lip
- 291: locking means sensor

- L: Longitudinal Direction
- H: Height Direction
- W: Width Direction
- T: Thickness Direction
- V: Vertical direction
- α: angle between platform and ground in entry position

## Claims

1. A foldable ramp (1) for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position; and
- a bridge (51) for rotatably connecting the platform with the passenger car,
**characterised in that**
the bridge (51) comprises an extrusion profile (73).

2. The foldable ramp (1) according to claim 1, wherein the extrusion profile (73) comprises a rotation shaft channel (105) for receiving a shaft being rotatably mounted to the passenger car, in particular wherein the rotation shaft channel (105) has a non-circular cross-section, in particular a D-shaped cross-section and/or wherein the extrusion profile (73) comprises a corrugated surface (75), in particular wherein the corrugated surface (75) extends between the platform and the car.

3. The foldable ramp (1) according to any of the preceding claims, wherein the extrusion profile (73) comprises at least one slot, preferably at least two slots, for connecting the extrusion profile (73) with at least one other part, in particular with a reinforcing part (79), such as a steel inlay (79), of the bridge (51), and/or wherein the extrusion profile (73) comprises at least one notch, preferably at least two notches, for receiving at least one other part, in particular a bridge side plate (69) and/or a bridge rear plate (77), of the bridge (51).

4. The foldable ramp (1) according to any of the preceding claims, wherein the extrusion profile (73) comprises at least one, preferably at least two or three, screw holes, in particular on each side of the extrusion profile (73) along a rotation axis (103) of the bridge (51), for connecting at least one part, in particular a bridge side plate (69), in particular on each side of the bridge (51) along a rotation axis (103) of the bridge (51), with the extrusion profile (73), and/or wherein the extrusion profile (73) is a hollow profile with closed cross-section and/or is extruded in a direction parallel to a rotation axis (103) of the bridge (51) and/or wherein the extrusion profile (73) comprises or consists of aluminum or an aluminum alloy.

5. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position, and
- a bridge (51) for rotatably connecting the platform with the passenger car,
**characterised in that**
the bridge (51) comprises at least one aluminum part, at least one plastic part, in particular comprising or consisting of polyamide, and at least one reinforcing part (79), in particular steel part, connecting the at least one plastic part with the at least one aluminum part.

6. The foldable ramp (1) according to claim 5, wherein the at least one plastic part is a bridge side plate (69) carrying and/or guiding a pin of a pivot mechanism (53) of the foldable ramp and/or wherein the at least one aluminum part is an extrusion profile (73) and/or a bridge rear plate (77), and/or wherein the at least one reinforcing part (79) is an inlay (79) being at least partially enclosed by the at least one aluminum part and the at least one plastic part.

7. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position,
- at least one locking mechanism (55, 191) with a locked state, in which a movement of the platform (3) from the transport position into the passive position and/or into the entry position is blocked, and a release state, in which the platform can move from the transport position into the passive position and/or into the entry position,
**characterised by**
- at least one electric actuator (57, 81) for switching from the locked state into the passive state or vice versa.

8. The foldable ramp (1) according to claim 7, wherein the at least one locking mechanism (55, 191) comprises a wire (61, 93) that, when the electric actuator (57, 81) is actuated, pulls a locking means of the at least one locking mechanism (55, 191) causing the locking mechanism (55, 191) to switch from the locked state into the release state or vice versa, in particular wherein the electric actuator (57, 81) and the locking means are located to each other in that, between the locking means and the electric actuator, the wire (61, 93) extends straight or with a curvature of 270° or less, preferably 210° or less, more preferably 180° or less, even more preferably 150° or less, most preferably 120° or less or 90° or less.

9. The foldable ramp (1) according to claim 7 or 8, wherein the foldable ramp (1) comprises an emergency lever (95) for switching independently from the electric actuator (57, 81) from the active state into the passive state or vice versa, in particular wherein the electric actuator (57, 81) and the emergency lever (95) pull, when actuated, a common wire of the at least one locking mechanism (55, 191) causing the locking mechanism (55, 191) to switch from the locking state into the release state or vice versa.

10. The foldable ramp (1) according to any of the claims 7 to 9, wherein the at least one electric actuator (57) and/or at least one locking means, in particular a latch lock, of the locking mechanism (55) is/are fixedly connected to the passenger car, preferably wherein the platform is located in between two electric actuators (57) and/or two locking means of at least two locking mechanisms (55) being fixedly connected to the passenger car, and/or wherein the at least one electric actuator (57) and/or at least one locking means, in particular latch lock, of the locking mechanism (55) is/are covered by a plate (59), in particular a plate (5) forming a sealing edge with a sealing profile of a bridge (51), in particular of a bridge rear plate (77), of the foldable ramp.

11. The foldable ramp (1) according to any of the claims 7 to 10, wherein the locking mechanism (55) comprises at least one pin being fixedly connected to a bridge (51), in particular a bridge side plate (69), which engages with a locking means, in particular a latch lock, of the locking mechanism (55) for blocking a movement of the platform (3), in particular from the transport position into the entry position.

12. The foldable ramp (1) according to any of the claims 7 to 11,
wherein the at least one electric actuator (81) is located inside a bridge (51), in particular in between two side plates (59) of a bridge (51), of the foldable ramp (1), in particular wherein the electric actuator (81), when actuated, pulls a locking means of the locking mechanism (191) via a wire (93) extending through a hole in at least one of the bridge side plates (69), or
wherein the at least one electric actuator (81) is connected to a bridge side plate (69), in particular on the same side of a bridge side plate (69) carrying locking means of the locking mechanism (161) and/or on the side of the bridge side plate (69) facing away from the inside of a bridge and/or the passenger car, in particular wherein the electric actuator (81), when actuated, pulls the locking means via a wire (93).

13. The foldable ramp according any of the claims 7 to 12, wherein the at least one locking mechanism (191) comprises at least one locking means that, when the locking mechanism (191) is in locked state, blocks the movement of the platform by directly engaging with a pin of a pivot mechanism (53) of the foldable ramp (1) moving translationally, in particular relative to a bridge (51) of the foldable ramp, when the ramp moves, in release state, from the transport position into the passive position.

14. The foldable ramp (1) according to any of the preceding claims, comprising
- at least one first, preferably at least two, locking mechanism (55), in particular according to claim 10 or 11, with a locked state, in which a movement of the platform from the transport position into the entry position is blocked, and a release state, in which the platform can move from the transport position into the entry position, and
- at least one, preferably at least two, second locking mechanism (191), in particular according to claim 12 or 13, with a locked state, in which a movement of the platform (3) from the transport position into the passive position is blocked, and a release state, in which the platform (3) can move from the transport position into the passive position.

15. The foldable ramp (1) according to any of the claims 7 to 14, comprising
at least one processor; and
at least one memory storing instructions that, when executed by the at least one processor, cause the foldable ramp (1) at least to perform:
processing an indication indicating that the at least one electric actuator (57, 81) is and/or was actuated, in particular further comprising means, in particular a light source (37, 39), for communicating an operational state of the foldable ramp, wherein the means communicate an operational state, for instance a light or sound signal, when the at least one locking mechanism (55, 191) is in locked state.
